# EUROPÄISCHE PATENTSCHRIFT

(11) **EP 3 984 259 B1**
(45) Veröffentlichungstag und Bekanntmachung des Hinweises auf die Patenterteilung: **21.05.2025**
(21) Anmeldenummer: 19828280.8
(22) Anmeldetag: 23.12.2019
(51) Int. Cl.: H04W 4/80, H04B 5/77, H04W 4/35, G06F 3/147, H04W 52/02, H04W 88/08, G06Q 10/087, H04W 88/10, H04W 92/10, H04W 88/18

(54) **ELEKTRONISCHES REGALETIKETTEN-SYSTEM MIT REGALSCHIENEN-SUBSYSTEM**
ELECTRONIC SHELF LABEL SYSTEM WITH SHELF RAIL SUBSYSTEM
SYSTÈME D'ÉTIQUETAGE ÉLECTRONIQUE DES ÉTAGÈRES AVEC SOUS-SYSTÈME DE RAILS D'ÉTAGÈRES

(30) Priorität: 14.06.2019 WO PCT/EP2019/065715; 14.06.2019 WO PCT/EP2019/065718; 17.06.2019 WO PCT/EP2019/065894; 19.08.2019 WO PCT/EP2019/072141
(43) Veröffentlichungstag der Anmeldung: 20.04.2022
(73) Patentinhaber: VusionGroup GmbH, 8072 Fernitz-Mellach (AT)
(72) Erfinder: RÖSSL, Andreas, 8072 Fernitz-Mellach (AT)
(74) Vertreter: Schneider, Michael
(86) Internationale Anmeldenummer: PCT/EP2019/086993
(87) Internationale Veröffentlichungsnummer: WO 2020/249251

(56) Entgegenhaltungen:
- EP-A1- 0 889 425
- US-A1- 2001 048 057

## Beschreibung

### Technisches Feld

Die Erfindung betrifft ein elektronisches Regaletiketten-System mit einem Regalschienen-Subsystem.

### Hintergrund.

Ein elektronisches Regaletiketten-System zur Anzeige von Information mit Hilfe von elektronischen Regaletikettenanzeigen, nachfolgend kurz ESL-System genannt, wobei ESL für "Electronic Shelf Label" steht, mit einem proprietären Regalschienen-Sub-System ist beispielsweise aus der internationalen Patentanmeldung WO 2017/153481 A1 bekannt. Bei diesem bekannten ESL-System ist an jeder Regalschiene ein solches Regalschienen-Sub-System verbaut. Bei diesem Sub-System ist die Regalschiene mit elektrischen Leiterbahnen ausgerüstet, mit deren Hilfe durch ein Management-Modul der Regalschiene die ESLs der Regalschiene angesteuert werden. Die ESLs weisen an ihrer Rückseite gefederte Kontakte auf, mit denen die Leiterbahnen kontaktiert werden, um die ESLs elektrisch mit dem Management-Modul zu verbinden.

Dieses Regalschienen-Sub-System ist jedoch relativ teuer, weil eine Vielzahl, insbesondere vereinzelter, mechanischer Komponenten in jedem ESL und in jeder Regalschiene vorzusehen ist. Diese mechanischen Komponenten unterliegen einer natürlichen Abnützung. Zudem können die mechanischen Komponenten bei unsachgemäßer Handhabung verunreinigt oder sogar beschädigt werden. Dies kann im Betrieb zu Störungen führen. Auch geht mit den mechanischen Komponenten ein erheblicher Mehraufwand in der Herstellung wie auch in der Wartung, die zur Vermeidung der genannten Probleme im Betrieb nötig ist, einher. Bei dem bekannten System existiert zudem die Einschränkung, dass die ESLs nicht wahlfrei entlang der Regalschiene positioniert oder verschoben werden können.

EP0889425 A1 offenbart ein Kommunikationssystem mit einem zentralen Server und einer Reihe von elektronischen Regaletiketten, wobei der Server über eine drahtlose Verbindung mit einem Regalcontroller kommuniziert, und dieser Regalcontroller dann mit den Etiketten des Regals.

US 2001/048057 A1 offenbart ein System, in dem ein zentraler Controller Informationen mit Regaletiketten austauschen kann, wobei der Informationaustausch über eine Regalschiene mit einer Induktionsschleife durchgeführt wird.

Die Erfindung hat sich die Aufgabe gestellt, ein verbessertes ESL-System bereitzustellen, bei dem die vorstehend genannten Probleme überwunden sind.

### Zusammenfassung der Erfindung

Diese Aufgabe wird durch ein elektronisches Regaletiketten-System gelöst, wobei das System einen Server aufweist, der dazu ausgebildet ist, eine Vielzahl von Regaletiketten individuell zu adressieren, um mit ihnen auf adressierte Weise Daten zu kommunizieren, und wobei das System zumindest einen Access-Point aufweist, der mit dem Server verbunden ist und zur funktechnischen Kommunikation der Daten mit den Regaletiketten ausgebildet ist, und wobei das System an einer Regalschiene eines Regals ein Near-Field-Communication-, abgekürzt NFC-, Sub-System aufweist, wobei das NFC-Sub-System derart charakterisiert ist, dass die Regalschiene einen NFC-Reader aufweist, der zur funkbasierten Kommunikation mit dem Access-Point ausgebildet ist, und dass zumindest eine an den NFC-Reader angeschlossene Leiterschleife, die entlang der Regalschiene ausgebildet ist und zur NFC-Kommunikation mit einem NFC-fähigen Regaletikett dient, vorgesehen ist, wobei korrespondierend zu der Leiterschleife zumindest ein NFC-fähiges Regaletikett an der Regalschiene angebracht ist, und wobei der NFC-Reader zur NFC-Kommunikation der Daten mit dem durch den Server adressierten Regaletikett ausgebildet ist.

Die Aufgabe wird weiterhin gelöst durch eine Verfahren zum Betreiben eines elektronischen Regaletiketten-Systems, wobei in dem System mit Hilfe eines Servers eine Vielzahl von Regaletiketten individuell adressiert wird und mit ihnen auf adressierte Weise Daten kommuniziert werden, wobei in dem System die Daten funktechnisch über zumindest einen Access-Point, der mit dem Server verbunden ist, mit den Regaletiketten kommuniziert werden, wobei das System an einer Regalschiene eines Regals ein Near-Field-Communication-, abgekürzt NFC-, Sub-System aufweist, wobei das NFC-Sub-System derart charakterisiert ist, dass die Regalschiene einen NFC-Reader aufweist, der zur funkbasierten Kommunikation mit dem Access-Point ausgebildet ist, und dass zumindest eine an den NFC-Reader angeschlossene Leiterschleife, die entlang der Regalschiene ausgebildet ist und der NFC-Kommunikation mit einem NFC-fähigen Regaletikett dient, vorgesehen ist, wobei korrespondierend zu der Leiterschleife zumindest ein NFC-fähiges Regaletikett an der Regalschiene angebracht ist, und wobei gemäß dem Verfahren die Daten zwischen dem NFC-Reader und dem durch den Server adressierten Regaletikett mittels NFC-Kommunikation kommuniziert werden.

Die Aufgabe wird weiterhin durch eine Verwendung eines Near-Field-Communication-, abgekürzt NFC-, Sub-Systems an einer Regalschiene eines Regals eines elektronischen Regaletiketten-Systems gelöst, wobei die Regalschiene einen NFC-Reader und zumindest eine an den NFC-Reader angeschlossene Leiterschleife, die entlang der Regalschiene ausgebildet ist und zur NFC-Kommunikation mit einem NFC-fähigen Regaletikett dient, aufweist und korrespondierend zu der Leiterschleife zumindest ein NFC-fähiges Regaletikett an der Regalschiene angebracht ist, das zur NFC-Kommunikation mit dem NFC-Reader ausgebildet ist, wobei das NFC-Sub-System dazu verwendet wird, in einer NFC-Kommunikation Daten mit einem durch einen Server des Systems adressierten Regaletikett zu kommunizieren.

Mit den erfindungsgemäßen Maßnahmen geht der Vorteil einher, dass das an der Regalschiene anzubringende Regaletikett völlig frei von elektro-mechanischen Kontakten und den damit einhergehenden Problemen ist. De facto ist im Unterschied zu dem eingangs erwähnten, bekannten Sub-System, bei dem jedes Regaletikett eine spezielle, proprietäre elektro-mechanische Ausbildung aufweisen muss, nur ein standardisiertes NFC-Kommunikationsmodul im Regaletikett vorzusehen, um kontaktlos gemäß einer (gängigen) NFC-Spezifikation bzw. eines NFC-Standards mit dem ein Regalschienen-Management-Modul (auch Regalschienen-Controller genannt) bildenden NFC-Reader zu kommunizieren.

Insbesondere bei der üblicherweise hohen Anzahl an installierten Regaletiketten (mitunter bis zu mehreren 10.000 Stück in größeren Supermärkten) wirkt sich die Integration dieses standardisierten NFC-Moduls erheblich positiv auf die Kostenstruktur des Gesamt-Systems aus. Damit lässt sich einerseits das Regaletikett wesentlich kostengünstiger herstellen und wegen der vermiedenen, insbesondere wartungsanfälligen, elektro-mechanischen Komponenten auch wartungsfrei betreiben. Mehrkosten für die spezielle Regalschiene mit ihrer Leiterschleife sind hierbei natürlich gegeben, stehen jedoch in keinem Verhältnis zu den Herstellungs- und Betriebskosten, die für die bekannten Regaletiketten und die bekannten Regalschienen mit ihrer Vielzahl von elektro-mechanischen Kontaktelementen einzukalkulieren sind.

Im Unterschied zum bekannten Sub-System, ist im vorliegenden Fall lediglich pro Regalschiene ein einziger modifizierter NFC-Reader vorzusehen, dessen Modifikation im Wesentlichen darin besteht, dass er eine Ausbildung (strukturell gesprochen ein zusätzliches Kommunikationsmodul) zur Kommunikation mit dem Access-Point aufweist und die Leiterschleife kontaktiert. Diese elektro-mechanische Kontaktierung ist jedoch im Unterschied zum bekannten Sub-System nur an der Position des NFC-Readers vorzunehmen, der bevorzugt am linken oder rechten Ende der Regalschiene in diese integriert (z.B. an ihr befestigbar, einbaubar bzw. einschiebbar) ist. Dies wiederum bedeutet, dass die Regaletiketten mit der Einschränkung auf die Position bzw. Erstreckung der Leiterschleife entlang der Regalschiene wahlfrei entlang der Regalschiene positioniert werden können und auch versetzt oder frei (kontinuierlich) verschoben werden können. Somit ist in Analogie zur Positionierbarkeit von papierbasierten Regaletiketten eine Positionierung der elektronischen Regaletiketten angepasst an die tatsächliche Positionierung der Produkte möglich.

Sind die Regalschienen übermäßig lang, so können sie auch segmentiert sein und entsprechend der Anzahl der Segmente eine Anzahl von NFC-Reader mit zugeordneter(en) Leiterschleife(en) pro Segment (also am Ort der Segmente bzw. innerhalb der Segmente) aufweisen.

Das NFC-Sub-System übernimmt im elektronischen Regaletiketten-System die Rolle einer Vermittlungseinrichtung, um die vom Server adressierten Regaletiketten physikalisch anzusprechen, also mit ihnen kommunizieren zu können. Im NFC-Sub-System erfolgt die Kommunikation also NFC-Standardkonform, wobei die Adressierung der Regaletiketten durch den Server erfolgt und das NFC-Sub-System diese Adressierung umsetzt bzw. anwendet, worauf nachfolgend in unterschiedlichen Ausbildungsbeispielen eingegangen ist.

Die beim Kommunizieren auftretenden Daten können Statusdaten sein, die zum Beispiel von den adressierten Regaletiketten individuell abgefragt werden. Es können jedoch auch Befehlsdaten sein, die Befehle repräsentieren, die von den Regaletiketten decodiert und verarbeitet werden können und vom Server an das adressierte Regaletikett übermittelt werden. Diese Befehle können zum Beispiel die Abfrage der Statusdaten bewirken oder auch andere Funktionen bzw. Funktionalitäten der Regaletiketten Steuerung. Bei den Daten kann es sich jedoch auch um Bildinhaltsdaten handelt, die an ein Regaletikett mit Anzeigemedium übertragen werden, um dort Bildinhalte darzustellen.

Bei dem Server kann es sich um einen physikalischen Computer handeln, der in den Räumlichkeiten eines Geschäfts untergebracht ist, und dort für die Steuerung bzw. Verwaltung der Regaletiketten und ihrer Aktivitäten zuständig ist und auf dem eine entsprechende Steuerung-Software abgearbeitet wird. Der Server kann jedoch auch als Cloud-Lösung verstanden werden, bei dem die Steuerung-Software in einem vom Geschäft örtlich losgelösten Rechenzentrum abgearbeitet wird. Die Steuerung-Software stellt unter anderem eine logische Verbindung zwischen einzelnen Regaletiketten und Produkten bzw. Produktgruppen her und speichert diese. Zudem verwaltet sie ein sogenanntes Planogramm, dass die örtliche Verteilung der Regaletiketten im Geschäftslokal repräsentiert. Weiterhin können von dieser Steuerung-Software auch Aufgaben der Warenlogistik wahrgenommen werden.

Weitere, besonders vorteilhafte Ausgestaltungen und Weiterbildungen der Erfindung ergeben sich aus den abhängigen Ansprüchen sowie der nachfolgenden Beschreibung. Dabei können Merkmale der einen Anspruchs-Kategorie entsprechend den Merkmalen der anderen Anspruchs-Kategorie weiterentwickelt werden, sodass die im Zusammenhang mit der einen Anspruchs-Kategorie angeführten Wirkungen und Vorteile auch für die andere Anspruchs-Kategorien vorliegen.

Im gegenständlichen System kommen unterschiedliche Kennungen (Identifikation-Daten) zum Einsatz, die zur eindeutigen Identifikation der im System eingebundenen Geräte dienen, und zwar wie folgt:
Eine Access-Point-Kennung identifiziert den jeweiligen Access-Point eindeutig. Die Access-Point-Kennungen der im System existierenden Access-Points sind dem Server bekannt, also dort gespeichert, weil die gesamte Kommunikation mit individuellen Regaletiketten über den jeweiligen Access-Point läuft, dem das betreffende Regaletikett funktechnisch zugeordnet ist, also registriert ist.
Eine Regaletiketten-Kennung identifiziert das jeweilige Regaletikett für den Server auf eindeutig Weise. Um einen adressierten Datenverkehr mit den Regaletiketten abwickeln zu können, verwaltet der Server daher auch die für ihn eindeutige Regaletiketten-Kennung jedes im Geschäft in Verwendung befindlichen Regaletiketts. Insbesondere speichert der Server die Zuordnung zwischen dem jeweiligen Access-Point und den diesem Access-Point zugeordneten Regaletiketten.
Eine Regaletiketten-NFC-Kennung identifiziert jedes Regaletikett auf eindeutige Weise im Kontext einer NFC-Kommunikation und wieder bei einer solchen NFC-Kommunikation mit einem NFC-Reader benützt.
Eine Reader-NFC-Kennung stellt das Pendent dazu auf der Seite des NFC-Readers dar und identifiziert einen NFC-Reader auf eindeutige Weise für eine NFC-Kommunikation mit einem der NFC-fähigen Regaletiketten.
Eine Reader-Kennung identifiziert jeden NFC-Reader auf eindeutige Weise und wird z.B. bei der Registrierung des betreffenden NFC-Readers bei einem der Access-Points benötigt, um in Folge mit diesem Access-Point funktechnisch zu kommunizieren.

An dieser Stelle sei bereits vorweggenommen, dass es gemäß einer ersten Ausbildungsform für den Server bereits ausreicht, die Regaletiketten-Kennung zu kennen, um das betreffende Regaletikett zu adressieren, wohingegen es gemäß einer zweiten Ausbildungsform zusätzlich nötig ist, eine Reader-Kennung zu kennen, die mit der betreffenden Regaletiketten-Kennung verknüpft ist, um das betreffende Regaletikett indirekt über den Reader zu adressieren. Darauf ist nachfolgend noch im Detail eingegangen.

Das elektronisches Regaletikett kann unterschiedlichste Funktionalitäten bereitstellen bzw. Funktionen erfüllen. Das Regaletikett kann z.B. zum Erfassen von Umgebungsparametern, wie z.B. zur Temperatur- oder auch Feuchtigkeitserfassung, oder als Eingabeelement zum Empfang einer Eingabeinteraktion eines Benutzers (z.B. Erfassen eines Fingerabdrucks oder einer Tastenbetätigung) oder auch als Anzeigemedium zur Präsentation einer Information für den Benutzer, nämlich als Regaletikettenanzeige, konfiguriert bzw. dementsprechend ausgebildet sein. In jedem Fall ist das Regaletikett derart ausgebildet, dass es an der gegenständlichen Regalschiene mechanisch anbringbar ist und dort im Verlauf einer NFC-Kommunikation mit Energie und mit Daten in der nachfolgend im Detail beschriebenen Art und Weise versorgt wird.

Das NFC-fähige Regaletikett weist eine standardisierte, erste NFC-Schnittstelle auf. Damit gehen zweierlei Vorteile einher. Diese NFC-Schnittstelle dient einerseits zur lokalen Energieübertragung am Regal bzw. an der Regalschiene, und zwar für ein einziges Regaletikett oder gleich eine Gruppe von an dieser Regalschiene angebrachten Regaletiketten, und andererseits auch direkt dort zur bidirektionalen lokalen kontaktlosen Kommunikation von Daten. Es lassen sich also die Regaletiketten kontaktlos ohne zusätzliche Verkabelung oder zusätzliche Netzgeräte usw. mit Energie versorgen. Zugleich werden damit auch Probleme im Funkverkehr verursacht durch andere Funksysteme in einem Geschäft vermieden, weil diese üblicherweise weit entfernt von den Regalen, wo das Regaletikett installiert ist, lokalisiert sind und daher kaum bis garkeinen Einfluss auf die lokale Energieübertragung wie auch Kommunikation zwischen den sehr eng aneinander direkt an der Regalschiene positionierten Kommunikationspartnern (NFC-fähiges Regaletikett und NFC-Reader mit seiner/seinen Leiterschleife(n)) haben.

NFC steht wie erwähnt für Near Field Communication und die zutreffenden Standards sind z.B. ISO/IEC 13157, -16353, -22536, -28361 usw.

Das Regaletikett, wenn konfiguriert als Regaletikettenanzeige, kann eine energiesparende Anzeigeeinheit, wie z.B. eine LCD-Anzeige aufweisen. Insbesondere basiert die zur Anwendung kommende Technologie auf Electronic-Ink- bzw. Electronic-Paper-Technologie. Ein solche Anzeigeeinheit weist also einen reflektiven Bildschirm im Fachjargon auch Electronic-Paper-Display, abgekürzt EPD, genannt und ist mit Hilfe von "elektronischem Papier", kurz "E-Papier" auch englisch "e-paper" oder "e-ink" genannt, realisiert. Diese Begriffe stehen im Wesentlichen für das Prinzip einer elektrophoretischen Anzeige, bei der z.B. positiv geladene, weiße Partikel und negativ geladene, schwarze Partikel in einem transparenten zähflüssigen Polymer enthalten sind. Durch kurzzeitiges Anlegen einer Spannung an Elektroden, zwischen denen das Medium aus Partikeln und Polymer angeordnet ist, werden in Betrachtungsrichtung entweder die schwarzen vor den weißen Partikeln platziert oder umgekehrt. Diese Anordnung bleibt dann ohne weitere Energiezufuhr für relativ lange Zeit (z.B. einige Wochen) aufrecht. Segmentiert man die Anzeige entsprechend, so lassen sich z.B. Buchstaben, Zahlen oder Bilder mit relativ hoher Auflösung realisieren, um besagte Informationen anzuzeigen. Ein solcher reflektiver Bildschirm kann jedoch auch mit Hilfe anderer Technologien, die z.B. unter dem Begriff "electrowetting" oder "MEMS" bekannt sind, realisiert sein. Der Bildschirm kann z.B. wie erwähnt zur Schwarz-Weiß-Wiedergabe, zur Graustufen-Wiedergabe, zur Schwarz-Weiß-Rot- oder auch Schwarz-Weiß-Gelb-Wiedergabe ausgebildet sein. Auch sollen zukünftige Entwicklungen mitumfasst sein, die eine Voll-Farb- oder auch Multi-Color-Wiedergabe ermöglichen. Bei einem solchen Bildschirm handelt es sich ganz allgemein um einen reflektiven, also passiven, nicht selbst leuchtenden Bildschirm bei dem die - relativ statische - Informationswiedergabe darauf basiert, dass von einer externen (künstlichen oder natürlichen) Lichtquelle erzeugtes Licht auf den Bildschirm einstrahlt und von dort zum Betrachter reflektiert wird.

Diese Anzeigeneinheit wird genauso wie die anderen elektronischen Komponenten des Regaletiketts beim Empfang eines NFC-Funk-Signals, das durch den NFC-Reader generiert wird, durch die erste NFC-Schnittstelle mit Hilfe der ersten NFC-Schnittstelle einerseits mit Energie und andererseits mit Daten, die Befehle zur Steuerung der Anzeigeeinheit oder auch Bildinhalte repräsentieren können, versorgt. Es lassen sich während der Energieversorgung über die NFC-Schnittstelle auch besagte Daten über diese erste NFC-Schnittstelle übermitteln, die von der Anzeigeeinheit dahingehend verarbeitet werden, dass sich der Bildinhalt ihres Bildschirms verändert. Nach abgeschlossener Veränderung des Bildinhalts kann von der Anzeigeeinheit über die NFC-Schnittstelle auch eine entsprechende Status-Information abgegeben werden, welche die erfolgreiche Veränderung des Bildinhalts repräsentiert. Nach abgeschlossener Veränderung des Bildinhalts, gegebenenfalls auch nach Abgabe der Status-Information, kann die Energieversorgung über die NFC-Schnittstelle z.B. durch Einstellung der Generierung des NFC-Funk-Signals beendet werden, wonach der Bildinhalt des Bildschirms bis zur nächsten gewollten Veränderung unverändert bleibt.

Der Einsatz der genannten Technologien erlaubt vor allem die Realisierung des Regaletiketts, insbesondere als Regaletikettenanzeige ausgebildet, ohne eine eigene Energieversorgung wie beispielsweise eine Batterie oder einen Akkumulator, die beide relativ teuer sind. Auch muss ein konventionelles Regaletikett zwecks Wartung oder Erneuerung der Batterie oder des Akkumulators derart ausgebildet sein, dass diese Energiespeicher austauschbar sind. Gegebenenfalls kommt in dem Regaletikett nur mehr ein Kondensator zur kurzfristigen, temporären Glättung bzw. Stabilisierung der internen Versorgungsspannung zur Anwendung. Das Regaletikett ist also derart ausgebildet, dass seine Elektronik zur Kommunikation oder zum Update des Bildschirminhalts oder zum Empfangen von Benutzerinteraktion oder zum Erfassen von Umgebungsparametern, insbesondere seine elektronische Steuerung, immer nur dann aktiv ist, wenn es mit Hilfe des NFC-Readers der regalschiene versorgt wird.

Das Regaletikett kann jedoch - zusätzlich zu einem oder mehreren ggf. vorgesehenen Glättungskondensator und/oder Stützkondensatoren - auch einen Langzeitenergiespeicher zu seiner zumindest temporären autonomen Energieversorgung aufweisen. Dieser Langzeitenergiespeicher kann beispielsweise durch eine austauschbare oder auch aufladbare Batterie realisiert sein. Bevorzugt ist der Langzeitenergiespeicher jedoch durch einen sogenannten "Superkondensator", kurz "Supercap", auch "Ultrakondensator" genannt, realisiert. Der Vorteil eines solchen Kondensator liegt darin, dass es sich um einen Hochleistungskondensator mit einem Kapazitätswert handelt, der viel höher als bei herkömmlichen Kondensatoren ist, der Kondensator jedoch niedrigere Spannungsgrenzen aufweist und die Lücke zwischen Elektrolytkondensatoren und aufladbaren Batterien überbrückt. Er speichert typischerweise 10-100 Mal mehr Energie pro Volumen- oder Masseneinheit als Elektrolytkondensatoren, kann Ladungen viel schneller als Batterien aufnehmen und abgeben und toleriert viel mehr Lade- und Entladezyklen als wiederaufladbare Batterien. Der Langzeit Energiespeicher wird bei dem Regaletikett durch das über die Leiterschleife abgegebene NFC-Funk-Signal versorgt bzw. aufgeladen, solange das NFC-Funk-Signal vorliegt. Das Aufladen kann direkt mithilfe einer Spannungserzeugungsstufe, die aus dem empfangenen NFC-Funk-signal eine Versorgungsspannung generiert, oder einer eigenen Lade-Elektronik des Regaletiketts erfolgen. Nach dem Wegfall des NFC-Funk-Signal, kann die Elektronik des Regaletiketts mithilfe des Langzeitenergiespeichers autonom, zumindest für einen wesentlich längeren Zeitraum, als dies durch einen Stützkondensator oder einen Glättungskondensator der Fall wäre, versorgt werden. Dies erlaubt die Verarbeitung von Befehlen oder auch Daten selbst bei Abwesenheit des NFC Signals ebenso wie die Bereitstellung von anderen Funktionalitäten, wie beispielsweise das Verarbeiten einer Benutzereingabe oder auch das Erfassen einer Temperatur in einem Zeitbereich, in dem das NFC-Funk-Signal nicht vorliegt.

Das Gehäuse des Regaletiketts kann vollständig und dauerhaft gekapselt sein, weil kein Austausch des Energiespeichers mehr nötig ist, so dass es sich nur mehr für Recyclingzwecke (z.B. mit Spezialwerkzeug) öffnen lässt.

Es lässt sich somit ein auf wenige, absolut benötigte elektronische Komponenten reduziertes und daher auch extrem günstiges Regaletikett realisieren. Dieses extrem reduzierte Regaletikett braucht nur mehr über eine Basisfunktionalität zu verfügen, wie z.B. standardisierte NFC-Kommunikation mit standardisierter Energieversorgung während der NFC-Kommunikation, was mit Hilfe eines kommerziell erhältlichen NFC-Moduls realisiert ist.

Updates des Bildschirms der energiesparenden Anzeigeeinheit und Statusbericht dazu oder auch die Übermittlung von Daten betreffend eine Benutzerinteraktion oder auch einen Umgebungsparameter, werden nicht direkt von der Regaletikettenanzeige in einer Kommunikation mit einem Access-Point erledigt, so wie dies bei bekannten Systemen der Fall ist, sondern von dem zwischengeschalteten NFC-Reader abgewickelt, der seinerseits mit dem Access-Point funktechnisch in Kontakt steht, worauf nachfolgend noch im Detail eingegangen ist.

Wie erwähnt ist an der Regalschiene eine Leiterschleife ausgebildet und die Schleifenanschlüsse dieser Leiterschleife sind mit dem NFC-Reader der Regalschiene verbunden. Die Leiterschleife bildet also einen Bestandteil des NFC-Readers zur kontaktlosen NFC-Kommunikation mit dem NFC-fähigen Regaletikett, das an der Regalschiene korrespondierend zu der Leiterschleife montiert ist. "Kontaktlos" bedeute hier, dass dies mit Hilfe einer induktiven Kopplung zwischen zwei benachbart lokalisierten Leiterschleifen bzw. Spulen erfolgen kann. Zu diesem Zweck weist das Regaletikett auch eine Leiterschleife bestehend aus einer einzigen Schleife oder einer Vielzahl von Windungen, also eine Spule, auf. Die Signalübertragung von dem NFC-Reader auf das NFC-fähige Regaletikett kann jedoch auch durch ein Aussenden des NFC-Funk-Signals und ein Empfangen mit einer Antenne des Regaletiketts erfolgen. Der NFC-Reader weist dazu einen Transmitter mit einer Antennenkonfiguration auf, die im Wesentlichen durch die Leiterschleife gegeben ist. Für den Fachmann erschließe es sich routinemäßig, dass auch ein Antennen-Anpassungsnetzwerk und eine Sendestufe, ein Modulator, wie auch ein Demodulator usw. vorhanden sind. Diese Komponenten und ihre Zusammenschaltung an analoge Antennenkomponenten sind den einschlägigen "Application-Notes" von NFC-Reader-IC-Herstellern zu entnehmen.

Um das NFC-Signal zu empfangen, weist das Regaletikett auch eine Leiterschleife bestehend aus einer einzigen Schleife bzw. Windung oder einer Vielzahl von Windungen, also eine Spule, auf. Diese Spule ist ein Bestandteil der ersten NFC-Schnittstelle des Regaletiketts. Auch hier gilt, dass sich die konkrete Realisierung den einschlägigen "Application-Notes" der Hersteller von NFC-ICs entnehmen lässt.

Weiterhin bedeutet "korrespondierend zu", dass das Regaletikett benachbart zu der durch die Leiterschleife aufgespannten Fläche positioniert ist und dort im Wesentlichen innerhalb einer durch die Leiterschleife begrenzten Zone lokalisiert ist. Die Leiterschleife selbst kann in der Ebene der Regalschiene, z.B. sichtbar, ausgebildet sein oder von einem schützenden Material(streifen) bedeckt sein. Wird das Regaletikett in die Regalschiene eingesetzt (also dort mechanisch befestigt), so befindet sich die in dem Regaletikett verbaute Leiterschleife bzw. Spule automatisch in der für die induktive Kopplung zwischen den beiden nebeneinander positionierten Leiterschleifen bzw. Spulen nutzbaren Zone. Bevorzugt sind bei dem in die Regalschiene eingesetzten Regaletikett die durch die beiden Leiterschleifen bzw. Spulen (einerseits der Regalschiene angehörend und anderseits dem Regaletikett angehörend) aufgespannten Flächen parallel zueinander orientiert und im Abstand von weniger als einem Millimeter bis hin zu einigen Millimetern lokalisiert. Um die Übertragung des NFC-Funk-Signals nicht zu behindern ist die Regalschiene selbst aus einem geeigneten Material, bevorzugt aus Kunststoff, gefertigt. Sie kann an ihrer Rückseite auch ein Abschirmblech aufweisen, um eine definierte Dämpfung des Antennenschwingkreises des NFC-Readers zu erhalten, was eine Abstimmung des Antennenschwingkreises auf diese definierte Umgebung ermöglicht und somit erheblich zur Kommunikationssicherheit beiträgt, weil metallische Lasten in der Umgebung des NFC-Readers somit weitestgehend vernachlässigbar sind.

Der Umfang der Leiterschleife der Regalschiene kann sich beispielsweise entlang der gesamten Länge der Regalschiene und zumindest eines Teils der gesamten Höhe der Regalschiene erstrecken. Zur Realisierung der Leiterschleife kann eine einzige umlaufende Leiterbahn oder eine spulenartig mehrfach umlaufende Leiterbahn, also eine mehrere Windungen aufweisende Leiterbahn, vorgesehen sein. Auch können mehrere Leiterschleifen oder Spulen entlang der Regalschiene verbaut sein, die mit dem NFC-Reader verbunden sind. In diesem Zusammenhang kann es vorteilhaft sein, dass der NFC-Reader zum Multiplexen der Leiterschleifen ausgebildet ist. Es wird dabei immer nur eine einzige Leiterschleife, die elektronisch ausgewählt ist, zur Übertragung des NFC-Funk-Signals verwendet. Als besonders vorteilhaft hat es sich erwiesen, wenn pro Regalschiene genau ein einziger NFC-Reader zum Einsatz kommt, weil dies den Einsatz eines NFC-Readers ohne Leiterschleifen-Multiplexer erlaubt. Dies erlaubt den Einsatz eines konventionellen NFC-ICs (Integrated Circuits) zur Energieversorgung für eine gesamte Regalschiene.

Die Energieversorgung des NFC-Reades der Regalschiene kann auf unterschiedliche Weise realisiert sein. So kann der NFC-Reader mit einem separaten Netzgerät versorgt werden. Auch kann eine Gruppe der NFC-Reader mit einem zentralen Netzgerät versorgt werden. Besonders bevorzugt ist der NFC-Reader jedoch auf funkbasierte Weise mit Energie versorgbar ausgebildet. Dies setzt eine Versorgungsstation voraus, die ihrerseits als Funk-Energiequelle zur, insbesondere gerichteten, funkbasierten Energieversorgung des NFC-Readers ausgebildet ist. Mit Hilfe der Versorgungsstation erfolgt also eine kontaktlose zielgerichtete Energieübertragung hin zu dem NFC-Reader. Dies ermöglicht eine im Wesentlichen kabelfreie Versorgungsinfrastruktur von einerseits der an der Regalschiene befestigten Regaletiketten und andererseits auch der für die Versorgung der Regaletiketten vorgesehenen NFC-Reader. De facto erspart sich der Errichter des Systems die Verkabelung zwischen der tatsächlichen Energiequelle und dem jeweiligen Regal. Dieser Umstand ermöglicht eine im Wesentlichen wahlfreie Positionierung der Regale im Geschäft wie auch die wahlfreie und einfache Positionierung der Regalschienen an verschiedensten Regalen wie auch deren Austausch zwischen den Regalen. Diese Art der Energieübertragung wie auch die zugrundeliegende Technologie ist unter dem Begriff "Power over WiFi" bekannt. Mit dieser Technologie ausgerüstete Funk-Energiequellen lassen sich beispielsweise an der Decke eines Geschäftslokals installieren und versorgen in einem Umkreis von bis zu maximal 10 Meter selektiv die dort den jeweiligen Regalschienen zugeordneten und in diesem Umkreis lokalisierten NFC-Reader mit Hilfe von zu ihnen hingerichteten leistungsstarken, also fokussierten Funksignalen.

Zusätzlich zu der NFC-Schnittstelle, die für die Kommunikation mit den NFC-fähigen Regaletiketten vorgesehen ist, weist der NFC-Reader eine weitere Schnittstelle auf, nämlich das bereits erwähnte zusätzliche Kommunikationsmodul, das zur Kommunikation mit dem Access-Point bestimmt ist. Diese weiter Schnittstelle ist zur Funkkommunikation ausgebildet und weist demgemäß einen Funk-Transceiver zur Kommunikation im z.B. 2,4 GHz Funk-Band auf. Der Transceiver ist eine Elektronik, die sowohl zum Empfangen wie auch Senden von Funksignalen ausgebildet ist und bei der die erforderliche Funktionalität zum Modulieren eines Trägersignals wie auch Demodulieren von Empfangssignalen ausgebildet ist. Der Transceiver kann durch aktive und passive elektronische Komponenten oder Baugruppen, wie etwa Anpassungsnetzwerk für eine Antenne und Antennenkonfiguration usw., realisiert sein, mit deren Hilfe analoge Signale in digitale Signale und umgekehrt konvertierbar sind. Der Transceiver kann mit einer Logikstufe gekoppelt sein. Die Logikstufe kann z.B. vollständig durch diskrete Hardware realisiert sein oder einen Mikroprozessor und Speicherbausteine oder einen Mikrokontroller mit integrierten Speicherbausteinen aufweisen, sodass in den Speicherbausteinen gespeicherte Software abarbeitbar ist. Der NFC-Reader kann mit Hilfe seines Transceivers ein Funk-Signal von dem Access-Point empfangen, in dem Funk-Signal enthaltene Empfangsdaten mit Hilfe der Logikstufe verarbeiten und gegebenenfalls mit Hilfe der Logikstufe Antwortdaten generieren und diese über den Transceiver wieder als ein Funk-Signal an den Access-Point abgeben. Der NFC-Reader realisiert somit kommunikationstechnisch betrachtet einen "Gateway" für die Gesamtheit der an der betreffenden Regalschiene montierten Regaletiketten.

Analog dazu ist auch der Access-Point ausgerüstet, um funktechnisch mit dem NFC-Reader zu kommunizieren. Der Funkverkehr kann gemäß WLAN-, ZigBee- oder auch Bluetooth-Kommunikationsprotokoll erfolgen.

Besonders bevorzugt sind der Access-Point und der NFC-Reader zur funkbasierten Kommunikation gemäß einem (proprietären) Zeitschlitz-Kommunikationsverfahren ausgebildet, wobei bei dem Zeitschlitz-Kommunikationsverfahren in sich wiederholender Folge eine Anzahl von Zeitschlitzen pro Zeitschlitzzyklus zur Kommunikation bereitstehen, wobei bevorzugt jeder Zeitschlitz durch ein eindeutiges Zeitschlitzsymbol gekennzeichnet ist.

Bevorzugt kommt hierbei ein proprietäres Zeitschlitz-Kommunikationsverfahren wie es dem Prinzip nach aus der WO2015/124197, Seiten 2 bis 4, sowie den Figuren 1-8C mit zugehöriger Beschreibung bekannt ist, zum Einsatz, wobei im vorliegenden Fall nicht die Regaletiketten sondern der NFC-Reader zur Kommunikation mit dem Access-Point gemäß diesem Zeitschlitz-Kommunikationsverfahren ausgebildet ist, und zwar wie folgt.

Gemäß diesem proprietären Zeitschlitz-Kommunikationsverfahren kommuniziert der Access-Point mit einer Anzahl von NFC-Readern derart, dass in sich stetig (kontinuierlich) wiederholender Folge eine Anzahl von Zeitschlitzen pro Zeitschlitzzyklus zur Kommunikation bereitstehen und jeder Zeitschlitz durch ein eindeutiges Zeitschlitzsymbol auf eindeutige Weise gekennzeichnet ist und somit alleine durch das Zeitschlitzsymbol von anderen Zeitschlitzen unterscheidbar ist. Gemäß dem Verfahren sendet der Access-Point für den momentan vorliegenden Zeitschlitz ein Synchronisations-Datensignal aufweisend das Zeitschlitzsymbol am Beginn des jeweiligen Zeitschlitzes aus. Die NFC-Reader kennen diese Systematik des Zeitschlitz-Kommunikationsverfahrens und sind dazu ausgebildet, zu einem Aufwachzeitpunkt von einem (extrem energiesparenden) Schlaf-Zustand, in dem z.B. keine Funksignal-Empfangsbereitschaft besteht, in einen Aktiv-Zustand, in dem z.B. eine Funksignal-Empfangsbereistschaft besteht, zu wechseln und zum Empfangen des Synchronisations-Datensignals im Aktiv-Zustand, und, wenn das empfangene Zeitschlitzsymbol einen für den jeweiligen NFC-Reader bestimmten Zeitschlitz anzeigt, zum Definieren eines zu dem nächsten Auftreten des für diesen NFC-Reader bestimmten Zeitschlitz korrespondierenden neuen Aufwachzeitpunkts in einem auf den momentan vorliegenden Zeitschlitzzyklus folgenden Zeitschlitzzyklus.

Damit geht der Vorteil einher, dass ein Synchronismus zwischen dem Access-Point und einem der NFC-Reader auf möglichst einfache und trotzdem äußerst robuste Weise erkannt, beibehalten und während des Betriebs des Systems gewährleistet ist. Dies verbessert auch die Energieeffizienz der Gesamtheit der NFC-Reader, die logisch einem einzigen Access-Point zugeordnet sind, weil bereits unmittelbar zu Beginn des Zeitschlitzes die Prüfung auf Synchronismus stattfindet. Das weitere Verhalten des NFC-Readers hängt dann davon ob, ob eines der an seiner Regalschiene verbauten Regaletiketten oder er selbst in dem für ihn bestimmten Zeitschlitz adressiert ist.

Grundsätzlich könnte das Synchronisations-Datensignal ausschließlich durch das Zeitschlitzsymbol gebildet sein und weitere zur Kommunikation mit dem Access-Point (bzw. Server) benötigte Kommunikationsparameter, wie z.B. Adressdaten zur Adressierung oder Befehlsdaten zur Übermittlung von Befehlen aus dem Synchronisations-Datensignal ausgegliedert sein. Da das Zeitschlitzsymbol bevorzugt jedoch ein extrem kompakter Indikator zur Synchronisierung der Kommunikation im System ist, also z.B. durch die laufende Nummer des Zeitschlitzes gebildet sein kann, bietet es sich an, zusätzlich zu dem Zeitschlitzsymbol weitere Informationen in das Synchronisierungs-Datensignals einzubetten, worauf nachfolgend eingegangen wird.

Daher ist es von Vorteil, wenn der Access-Point zum Einbetten von Adressdaten in das Synchronisations-Datensignal ausgebildet ist, mit deren Hilfe eine Anzahl von NFC-Reader und/oder Regaletiketten pro Zeitschlitz individuell adressierbar ist.

Analog zu dem zuvor gesagten über das Einbetten von Adressdaten liegt ein weiterer erheblicher Beitrag zur Systemeffizienz vor, wenn der Access-Point zum Einbetten von Befehlsdaten in das Synchronisations-Datensignal ausgebildet ist, die beim adressierten Gerät (NFC-Reader und/oder Regaletiketten) zu einer Befehlsausführung führen. Es kann aber beispielsweise auch ohne eine individuelle Adressierung ein Befehl an alle einem bestimmten Zeitschlitz zugewiesenen Geräte übermittelt werden, der dann von einer relativ großen Gruppe von Geräten, beispielsweise allen, ausgeführt werden kann.

Grundsätzlich könnte das Regaletikett bereits durch ein Erkennen seiner individuellen Adressierung eine standardisierte (vordefinierte) Aufgabe ausführen, ohne dass ein expliziter Befehl empfangen werden müsste. Als besonders vorteilhaft hat es sich jedoch erweisen, wenn Adressdaten zur Adressierung eines individuellen Regaletikett und Befehlsdaten zur Übermittlung eines Befehls an dieses individuelle Regaletikett übermittelt werden und das Regaletikett dazu ausgebildet ist, die Befehlsdaten auszuwerten und den Befehl auszuführen, wenn es mit Hilfe der Adressdaten individuell adressiert ist. Somit lässt sich in einer mitunter relativ großen Gruppe von Regaletiketten ein Befehl für ein einziges Regaletikett übermitteln.

Es reicht also zunächst völlig aus, dass jeder NFC-Reader, der sich an der Kommunikation mit dem betreffenden Access-Point beteiligt, also ihm funktechnisch z.B. durch initiale Registrierung zugeordnet ist, über das Zeitschlitzsymbol Bescheid weiß, welches den für ihn bestimmten Zeitschlitz anzeigt. Jeder der NFC-Reader orientiert sich also individuell an dem Auftreten eines für ihn relevanten Zeitschlitzsymbols, identifiziert das für ihn relevante Zeitschlitzsymbol und definiert seinen nächsten Aufwachzeitpunkt, um mit dem durch die Kommunikationsstation vorgegebenen Timing des Zeitschlitz-Kommunikationsverfahrens synchron zu bleiben, wobei dieses Timing dem NFC-Reader wie gesagt bekannt ist. Dabei reicht es völlig aus, dass das Zeitschlitzsymbol den jeweiligen Zeitschlitz eindeutig identifiziert, z.B. mit einer für jeden Zeitschlitz individuellen Zeitschlitzkennung. Weitere Informationen kodiert in das Synchronisations-Datensignal, so wie dies oft bei anderen Verfahren vorkommt, sind hier unnötig, um die NFC-Reader synchron mit dem Access-Point zu betreiben, dem sie funktechnisch zugeordnet sind. Der betreffende NFC-Reader stellt seinen Synchronismus mit dem Access-Point also alleine durch den Umstand des Erkennens des Zeitschlitzsymbols fest, das zu dem von ihm erwarteten Zeitpunkt bzw. in einem Erwartungszeitfenster auftritt und den für ihn bestimmten Zeitschlitz anzeigt.

Nachdem der NFC-Reader seinen Synchronismus wie zuvor erörtert festgestellt hat, reicht es grundsätzlich aus, wenn er wieder in den Schlaf-Zustand wechselt, weil der nächste Aufwachzeitpunkt automatisch durch den ihm bekannten Zeitraster des Zeitschlitzkommunikationsverfahrens bekannt ist. Das Definieren des neuen Aufwachzeitpunktes kann sich somit darauf beschränken, dass eine z.B. Zeitsteuerstufe (z.B. ein Timer) des NFC-Readers mit den bereits zuvor zum Wechseln vom Schlaf-Zustand in den Aktiv-Zustand benutzen Timing-Parameter neu gestartet wird. Danach kann der betroffene NFC-Reader wieder in den Schlaf-Zustand wechseln und dort verharren, bis dass ausgelöst durch die Zeitsteuerung wieder ein Aufwachen und Wechseln von dem Schlaf-Zustand in den Aktiv-Zustand zu dem neuen Aufwachzeitpunkt in dem nächsten Zeitschlitzzyklus durchgeführt wird. Der NFC-Reader muss jedoch nicht zwingend für den Rest des für ihn bestimmten Zeitschlitzes im Schlaf-Zustand verharren, sondern kann auch während des Zeitschlitzes oder auch des Zeitschlitzzyklus weitere Aufgaben, wie z.B. eine NFC-Kommunikation mit einem der Regaletiketten, in seinem Aktiv-Zustand bearbeiten. Die zuvor erörterte Zeitsteuerung arbeitet dann im Hintergrund unabhängig von den anderen, weiteren Aktivitäten des NFC-Readers. Das Definieren des neuen Aufwachzeitpunktes kann durch die Bestimmung einer absoluten oder relativen Zeitangabe erfolgen, wie z.B. relativ zum Zeitpunkt des Auftretens des Synchronisations-Datensignals oder relativ zum Zeitpunkt, zu dem nach dem Aktiv-Zustand wieder der Schlaf-Zustand eingenommen wird, oder auch relativ zum Zeitpunkt zu dem das Ende des Synchronisations-Datensignals eintritt. Das Definieren des neuen Aufwachzeitpunktes kann jedoch auch so verstanden werden, dass die Dauer des nach dem Aktiv-Zustand, in dem das Zeitschlitzsymbol empfangen wurde, anschließenden Schlaf-Zustands oder auch die Summe der Dauer aus Schlaf-Zustand und Aktiv-Zustand oder auch die Summe der Dauer mehrerer solcher Zustandsfolgen den neuen Aufwachzeitpunkt bestimmt.

Da jeder NFC-Reader seine eigene Zeitsteuerstufe betreibt und exemplarische Streuungen des Verhaltes der jeweiligen elektronischen Komponenten nicht auszuschließen sind, kann das Definieren des neuen Aufwachzeitpunktes auch eine Kompensation einer für jeden NFC-Reader individuell vorliegenden Drift der Zeitbasis beinhalten. Zu diesem Zweck kann beispielsweise in dem NFC-Reader eine Zeitdifferenz zwischen dem erwarteten Auftreten des Synchronisations-Datensignal mit dem Zeitschlitzsymbol, das den für den jeweilige NFC-Reader bestimmten Zeitschlitz anzeigt, und dem tatsächlichen Auftreten gemessen werden und bei der Zeitsteuerstufe zur Korrektur ihres Timings berücksichtigt werden. Die Kompensation kommt jedoch nur bei festgestelltem Synchronismus zum Einsatz.

Wurde jedoch an Stelle des erwarteten Zeitschlitzsymbols ein anderes Zeitschlitzsymbol empfangen, liegt kein Synchronismus vor und der NFC-Reader muss eine Neu-Synchronisierung durchführen. Zu diesem Zweck wechselt ein solcher asynchrone NFC-Reader nicht periodisch, so wie dies im synchronen Zustand der Fall wäre, sondern z.B. zu einem beliebigen Zeitpunkt ein einziges Mal von seinem Schlaf-Zustand in seinen Aktiv-Zustand und verharrt in diesem Aktiv-Zustand in der Empfangsbereitschaft. Wenn in einer bestimmten Zeitspanne wie z.B. einer Zeitschlitzdauer nichts empfangen wurde, wechselt er wieder in den Schlaf-Zustand und wiederholt zu einem anderen Zeitpunkt den Empfangsversuch. Sobald ein Synchronisations-Datensignal empfangen wird, wird das Zeitschlitzsymbol ausgewertet, also geprüft. Das dabei empfangene Zeitschlitzsymbol zeigt mit höchster Wahrscheinlichkeit einen für den betreffenden NFC-Reader nicht bestimmten Zeitschlitz an, was von dem NFC-Reader autonom festgestellt wird. Der NFC-Reader kennt die Systematik des Auftretens der Zeitschlitzsymbole und kann nach Auswertung des empfangenen Zeitschlitzsymbols selbstständig entscheiden, ob er noch in dem vorliegenden Zeitschlitzzyklus (erster Fall) oder erst im darauffolgenden Zeitschlitzzyklus (zweiter Fall) mit dem für ihn bestimmten Zeitschlitz rechnen kann. Für den ersten Fall ist der NFC-Reader zum Definieren eines zu dem nächsten Auftreten des für ihn bestimmten Zeitschlitz korrespondierenden neuen Aufwachzeitpunkts in dem momentanen vorliegenden Zeitschlitzzyklus ausgebildet. Der NFC-Reader stellt durch Auswertung des empfangenen Zeitschlitzsymbols und unter Kenntnis der Systematik des Auftretens der Zeitschlitzsymbole fest, dass der für ihn bestimmte Zeitschlitz noch in dem momentan vorliegenden Zeitschlitzzyklus auftreten wird. Für den zweiten Fall ist der NFC-Reader zum Definieren eines zu dem nächsten Auftreten des für ihn bestimmten Zeitschlitz korrespondierenden neuen Aufwachzeitpunkts in jenem dem momentan vorliegenden Zeitschlitzzyklus folgenden Zeitschlitzzyklus ausgebildet. Der NFC-Reader stellt durch Auswertung des empfangenen Zeitschlitzsymbols und unter Kenntnis der Systematik des Auftretens der Zeitschlitzsymbole fest, dass der für ihn bestimmte Zeitschlitz in dem momentan vorliegenden Zeitschlitzzyklus nicht mehr auftreten wird, weil er in diesem Zeitschlitzzyklus bereits in der Vergangenheit auftrat. Wie einleitend zum synchronen Zustand erörtert, kommt auch für diese Art der Definition des neue Aufwachzeitpunkts besagte Zeitsteuerung zum Einsatz, wobei die Zeitsteuerung nun mit jenem Timing-Parameter betrieben wird, mit dem der erwünschte Eintritt in den synchronen Zustand erreicht wird. Der zu wählende Timing-Parameter ergibt sich für die Versorgung-Einrichtung aus der inhärenten Kenntnis des zur Anwendung kommenden Zeitschlitz-Kommunikationsverfahrens. Der Timing-Parameter wird also von der Elektronik des NFC-Readers, welche über die Parameter des Zeitschlitz-Kommunikationsverfahrens Kenntnis hat, bestimmt.

Diese Parameter können von dem NFC-Reader bei seiner Registrierung bei dem jeweiligen Access-Point von dem Access-Point abgefragt bzw. an ihn übertragen werden oder bereits vorab in dem NFC-Reader einprogrammiert sein. In beiden Fällen ist es zweckmäßig, wenn der NFC-Reader eine Speicherstufe zum Speichern der Parameter des Zeitschlitz-Kommunikationsverfahren aufweist und der NFC-Reader zum Zugreifen auf und Berücksichtigen dieser Parameter zwecks Definition des neuen Aufwachzeitpunkts ausgebildet ist. Die Parameter können alle Details des Timings des Zeitschlitz-Kommunikationsverfahren repräsentieren, wie etwa Parameter betreffend zeitliche Abläufe zum Kommunizieren zwischen dem Access-Point und dem NFC-Reader, Parameter betreffend vordefinierte Zeitpunkte oder Zeitabschnitte, aber auch Parameter betreffend die Grundstruktur des Zeitschlitz-Kommunikationsverfahrens, wie z.B. Anzahl der Zeitschlitze, die Dauer eines Zeitschlitzes, die Dauer des Zeitschlitzzyklus, oder auch als Parameter die explizit angegebenen Zeitschlitzsymbole zur Identifizierung der einzelnen Zeitschlitze oder auch Algorithmen zur Berechnung der Zeitschlitzsymbole. Unter Zuhilfenahme dieser Parameter kann ein asynchroner NFC-Reader autonom, also automatisch für sich selbst ohne externes Zutun abklären, ob auf Grundlage des soeben empfangenen Zeitschlitzsymbols der für ihn bestimmte Zeitschlitz noch innerhalb des momentan vorliegenden Zeitschlitzzyklus zu erwarten ist oder ob der für ihn bestimmte Zeitschlitz im vorliegenden Zeitschlitzzyklus bereits der Vergangenheit angehört und folglich der nächste für ihn bestimmte Zeitschlitz erst im nächsten Zeitschlitzzyklus auftreten wird. Der betroffene NFC-Reader berechnet im Aktiv-Zustand den neuen Aufwachzeitpunkt, wechselt in den Schlaf-Zustand und wechselt zu dem berechneten Aufwachzeitpunkt in den Aktiv-Zustand, empfängt das Zeitschlitzsymbol des für ihn bestimmten Zeitschlitzes und befindet sich danach wieder im synchronen Zustand. Soweit im vorliegenden Zeitschlitz keine weiteren Aktivitäten von ihm erwartet werden, wechselt er unverzüglich in den Schlaf-Zustand und wechselt danach erst wieder im nächsten Zeitschlitzzyklus in den Aktiv-Zustand, um das Synchronisations-Datensignal in dem für ihn bestimmten Zeitschlitz zu empfangen.

Dass nun der betreffende NFC-Reader über jenes Zeitschlitzsymbol Bescheid weiß, das den für ihn bestimmten Zeitschlitz anzeigt, also darüber Kenntnis hat, wann genau er im Aktiv-Zustand sein muss, um kommunikationstechnisch zur Verfügung zu stehen, ergibt sich auf unterschiedliche Weise und ist letztendlich davon abhängig, welche der beiden nachfolgend erörterten Ausbildungsformen zum Einsatz kommt.

Gemäß einer ersten Ausbildungsform speichert der NFC-Reader eine Datenstruktur, die eine Zuordnung eines an seiner Regalschiene befestigten Regaletiketts zu einem der Zeitschlitze repräsentiert, und wobei der NFC-Reader dazu ausgebildet ist, jenen Zeitschlitz, dem laut Datenstruktur ein Regaletikett zugeordnet ist, daraufhin zu prüfen, ob das an seiner Regalschiene befestigte Regaletikett durch den Server adressiert ist.

Die Datenstruktur setzt sich im vorliegenden Fall aus der Regaletiketten-Kennung, die auch dem Server bekannt ist und von ihm zur Adressierung verwendet wird, und dem zughörigen Zeitschlitzsymbol zusammen. Sie bilden für jedes Regaletikett, das an der Regalschiene des NFC-Readers befestigt ist, ein Datenpaar der Datenstruktur. Sind einem bestimmten Zeitschlitz mehrere an dieser Regalschiene befestigte Regaletiketten zugeordnet, was technisch durchaus möglich ist, so können deren Regaletiketten-Kennungen auch gruppiert dem jeweiligen Zeitschlitzsymbol zugeordnet sein oder auch separate Datenpaare aus der jeweiligen Regaletiketten-Kennung und betreffenden Zeitschlitzsymbol in der Datenstruktur gespeichert sein. Auch weist die Datenstruktur zu jeder für die Adressierung durch den Server bestimmten Regaletiketten-Kennung eine Regaletiketten-NFC-Kennung auf, die in einer NFC-Kommunikation zwischen dem NFC-Reader und dem Regaletikett zum Einsatz kommt, um das NFC-fähige Regaletikett auf NFC-Kommunikationseben anzusprechen.

Weiterhin ist der NFC-Reader dazu ausgebildet, bei Vorliegen eines positiven Prüfungsergebnisses Daten zwischen dem adressierten Regaletikett und dem Access-Point zu übertragen. Je nach Ausbildungsvariante können diese Daten nun im laut Datenstruktur für das adressierte Regaletikett bestimmten Zeitschlitz oder auch aufgeteilt über mehrere zusätzliche Zeitschlitze zunächst an den NFC-Reader übertragen werden. In Abhängigkeit davon, ob es sich bei den Daten um zeitkritische Daten handelt, können diese Daten dann innerhalb des NFC-Subsystems in Echtzeit, also im jeweiligen Zeitschlitz, mit dem betreffenden Regaletikett kommuniziert werden. Handelt es sich um keine zeitkritischen Daten, so können diese bei einer geplanten Übertragung hin zum Regaletikett zunächst im betreffenden Zeitschlitz empfangen und im NFC-Reader zwischengespeichert werden und danach losgelöst vom Timing des Zeitschlitz-Kommunikationsverfahrens in einer NFC-Kommunikation an das Regaletikett übertragen werden. Gleiches gilt für Daten, die vom Regaletikett abgerufen werden. Auch diese Daten können losgelöst vom Zeitschlitz-Kommunikationsverfahren zunächst innerhalb des NFC-Sub-Systems, also vom NFC-Reader, gesammelt und zwischengespeichert werden und danach im vorgesehen Zeitschlitz über den NFC-Reader an den Access-Point abgegeben werden.

Bei den Daten kann es sich um Befehlsdaten oder auch Inhaltsdaten handeln. Oft sind Inhaltsdaten an Befehlsdaten gekoppelt. So kann ein Anzeigesteuerbefehl mit Inhaltsdaten bildenden Bilddaten an ein Regaletikette mit Anzeigeeinheit übertragen werden. Ebenso können mit Hilfe eines Abfragebefehls von einem adressierten Regaletikett, das einen Temperatursensor aufweist, Temperaturdaten abgefragt werden, usw.

Die Ausbildung des NFC-Readers ist im vorliegenden Fall derart charakterisiert, dass der NFC-Reader, wie erwähnt, seinen energiesparenden Schlaf-Zustand, in dem keine Kommunikationsbereitschaft zur Kommunikation mit dem Access-Point besteht, und seinen Aktiv-Zustand, in dem eine Kommunikationsbereitschaft mit dem Access-Point besteht, aufweist, und dass der NFC-Reader dazu ausgebildet ist, zeitgerecht zum Auftreten jenes Zeitschlitzes, dem laut Datenstruktur ein Regaletikett zugeordnet ist, von dem Schlaf-Zustand in den Aktiv-Zustand zu wechseln. Dies bedeutet, dass der NFC-Reader auch mehrfach innerhalb eines Zeitschlitz-Zyklus zwecks Prüfung des Synchronismus und der Adressierung in seinem Aktiv-Zustand sein kann. Konkret hängt die Anzahl dieser Aktiv-Zustände davon ab, wie vielen Zeitschlitzen, die ihm an der Regalschiene zugeordneten Regaletiketten zugeordnet sind.

Die Datenstruktur erlaubt es dem synchronen NFC-Reader also zum Zeitpunkt des Auftretens des jeweiligen Zeitschlitzsymbols im Aktiv-Zustand zu sein und zu prüfen, ob eines oder mehrere seiner Regaletiketten, das/die in seiner Datenstruktur vermerkt ist/sind, vom Server mit Hilfe der Adressdaten adressiert ist / sind.

Im vorliegenden Fall ist auf der Seite des Servers implementiert, dass der Server in einer Datenbank eine individuelle Regaletiketten-Kennung jedes Regaletiketts speichert und das jeweilige Regaletiketten an Hand der Regaletiketten-Kennung direkt adressiert. Wie eingangs erwähnt kommt hier auch die Access-Point-Kennung zum Einsatz, um jenen Access-Point anzusprechen, über den das betreffende Regaletikett funktechnisch ansprechbar ist.

Ein bedeutender Vorteil dieser Ausbildungsform liegt nun darin, dass sie Rückwärtskompatibilität mit jener in der zuvor erwähnten WO2015/124197 ist. Demgemäß muss die auf dem Server laufende Softwareapplikation keine Kenntnis über das NFC-Subsystem aufweisen. Allerdings weist diese Ausbildungsform im Verhältnis zu dem in der WO2015/124197 offenbarten System bereits ab einer Installation von zwei oder mehreren Regaletiketten pro Regalschiene, wobei die zwei oder mehr Regaletiketten einem einzigen Zeitschlitz zugeordnet sind, eine wesentlich bessere System-Energie-Bilanz auf. Es muss nämlich im System der WO2015/124197 jedes Regaletikett pro Zeitschlitzzyklus mindestens einmal im Aktiv-Zustand sein, um seinen synchronen Zustand zu verifizieren und in Folge zu prüfen, ob es adressiert ist. Im Unterschied dazu muss bei der gegenständlichen Ausbildungsform nur jener NFC-Kontroller, dem die besagten zwei der mehreren Regaletiketten zugeordnet sind, in dem zutreffende Zeitschlitz im Aktiv-Zustand sein, um den Synchronismus zu verifizieren und drauf zu prüfen, ob eines oder mehrere der Regaletiketten adressiert sind.

Im Unterschied zu der zuvor erörterten Ausbildungsform ist gemäß einer zweiten Ausbildungsform der NFC-Reader selbst einem der Zeitschlitze zugeordnet und er speichert eine Datenstruktur, welche die an der Regalschiene des NFC-Readers befestigten Regaletiketten repräsentiert, und der NFC-Reader ist dazu ausgebildet, jenen Zeitschlitz, dem er selbst zugeordnet ist, daraufhin zu prüft, ob das an seiner Regalschiene befestigte Regaletikett durch den Server adressiert ist.

Im vorliegen Fall betrifft die durch den Server erfolgte Adressierung jedoch die primäre, also direkte Adressierung des NFC-Readers, über den dann eines seiner Regaletiketten indirekt adressiert wird. Die indirekte Adressierung des Regaletiketts wird dem adressierten NFC-Reader z.B. in Form der im Zusammenhang mit der Erörterung des Zeitschlitz-Kommunikationsverfahrens erwähnten Befehlsdaten, welche einen Indirekt-Adressierungsbefehl repräsentieren, der als Argument die Regaletiketten-Kennung des indirekt zu adressierenden Regaletiketts aufweist, im Zeitschlitz, dem der NFC-Reader zugeordnet ist, übermittelt.

Die Datenstruktur setzt sich im vorliegenden Fall aus der Regaletiketten-Kennung jener Regaletiketten zusammen, die an der Regalschiene des betreffende NFC-Readers befestigt sind. Auch weist die Datenstruktur zu jeder für die Adressierung durch den Server bestimmten Regaletiketten-Kennung auch eine Regaletiketten-NFC-Kennung auf, die in einer NFC-Kommunikation zwischen dem NFC-Reader und dem Regaletikett zum Einsatz kommt, um das NFC-fähige Regaletikett auf NFC-Kommunikationseben anzusprechen. Weiterhin kann die Datenstruktur auch das Zeitschlitzsymbol aufweisen, das den Zeitschlitz kennzeichnet bzw. anzeigt, der für den NFC-Reader bestimmt ist.

Weiterhin ist der NFC-Reader dazu ausgebildet, bei Vorliegen eines positiven Prüfungsergebnisses Daten im für ihn bestimmten Zeitschlitz zwischen dem adressierten Regaletikett und dem Access-Point zu übertragen.

Hinsichtlich der Verarbeitung der Daten im NFC-Sub-System können die im Zusammenhang mit der vorhergehend erörterten Ausbildungsform angeführten Überlegungen und Mechanismen auf analoge Weise zur Anwendung kommen.

Die Ausbildung des NFC-Readers ist im vorliegende Fall derart, dass der NFC-Reader einen energiesparenden Schlaf-Zustand, in dem keine Kommunikationsbereitschaft zur Kommunikation mit dem Access-Point besteht, und einen Aktiv-Zustand, in dem eine Kommunikationsbereitschaft mit dem Access-Point besteht, aufweist und dass der NFC-Reader dazu ausgebildet ist, zeitgerecht zum Auftreten jenes Zeitschlitzes, dem er selbst zugeordnet ist, von dem Schlaf-Zustand in den Aktiv-Zustand zu wechseln. Dies bedeutet, dass ein synchroner NFC-Reader innerhalb eines einzigen Zeitschlitz-Zyklus nur ein einziges Mal im Aktiv-Zustand ist, um seinen Synchronismus zu überprüfen und darauf zu prüfen, ob er in dem für ihn bestimmten Zeitschlitz adressiert ist. Erwähnt sei hier, dass auch mehrere NFC-Reader einem einzigen Zeitschlitz zugeordnet sein können.

Im vorliegenden Fall ist auf der Seite des Servers implementiert, dass der Server in einer Datenbank eine Verknüpfung zwischen einer Reader-Kennung eines NFC-Readers und einer Regaletiketten-Kennung jenes Regaletiketts, das an der Regalschiene des NFC-Readers installiert ist, speichert und ein Regaletikett indirekt über die Verknüpfung der Regaletiketten-Kennung des zu adressierenden Regaletiketts mit der Reader-Kennung adressiert.

Im Unterschied zu der ersten Ausbildungsform ist nun die zweite Ausbildungsform nicht mehr rückwärtskompatibel mit jener der zuvor erwähnten WO2015/124197, weil in dem System gemäß der WO2015/124197 schlichtweg keine Möglichkeit vorgesehen ist, die Reader-Kennung zu speichern, zu verwalten und für die Adressierung der Regaletiketten zu nutzen. Im Unterschied dazu ist die zweite Ausbildungsform jedoch im Verhältnis zur Lösung der WO2015/124197, aber auch im Unterschied zur Lösung gemäß der ersten Ausbildungsform wesentlich Energie-Effizienter, und zwar sobald zwei oder mehr Regaletiketten pro Regalschiene installiert sind. Es muss nämlich im System der WO2015/124197 jedes Regaletikett pro Zeitschlitzzyklus mindestens einmal im Aktivzustand sein, um seinen synchronen Zustand zu verifizierte und in Folge zu prüfen, ob es adressiert ist. Gleiches gilt für die erste Ausbildungsform, wobei hier der NFC-Reader pro Zeitschlitz-Zyklus zwei Mal im Aktiv-Zustand sein muss, wenn an seiner Regalschiene zwei Regaletiketten verbaut sind, die unterschiedlichen Zeitschlitzen zugeordnet sind. Im Unterschied dazu reicht es aus, wenn in der gegenständlichen Ausbildungsform der NFC-Reader pro Zeitschlitzzyklus nur ein einziges Mal im Aktiv-Zustand ist, um seinen synchronen Zustand zu verifizierte und in Folge zu prüfen, ob er adressiert ist. Dies ist insbesondere davon unabhängig, wie viele Regaletiketten an seiner Regalschiene installiert sind.

Gemäß einer bevorzugten Ausbildung des Regaletiketts, weist das Regaletikett eine energiesparende Anzeigeeinheit, insbesondere basierend auf Electronic-Ink- bzw. Electronic-Paper-Technologie usw., auf, was erheblich zur Energie-Effizienz des Systems beiträgt. Eine solche Anzeigeeinheit kommt abgesehen von Änderungen des Bildinhalts ohne Energieaufnahme aus.

Besonders bevorzugt weist das Regaletikett einen aufladbaren, elektrischen Energiespeicher, bevorzugt den erwähnten Langzeitenregiespeicher, auf und ist zum kontaktlosen Aufladen des Energiespeichers mit Hilfe eines NFC-Funk-Signals des NFC-Readers ausgebildet. Diese Realisierung schöpft das Potenzial des NFC-Sub-Systems vollständig aus, weil nicht nur Adressierung und Datenverkehr über das NFC-Sub-System abgewickelt werden, sondern das NFC-Sub-System einen autonomen Betrieb der Regaletiketten sogar für Zeitspannen, in denen kein NFC-Funk-Signal vorliegt, sicherstellt, und zwar ohne jeglichen Verkabelungs- und/oder Wartungsaufwand, der andernfalls für den Austausch von Batterien und die Entsorgung von verbrauchten Batterien oder die Wiederaufladung von aufladbaren Batterien nötig wäre.

Ganz allgemeine sei festgehalten, dass im vorliegenden System jeder im System installierte Access-Point als übergeordnete Schnittstelle zwischen dem Server bzw. seiner Software-Applikation und dem beim jeweiligen Access-Point registrierten NFC-Sub-System dient. Auf der Regalschienen-Ebene nimmt diese Schnittstellen-Funktion der NFC-Reader wahr, der als untergeordnete Schnittstelle zwischen den an seiner Regalschiene installierten Regaletiketten und dem Access-Point dient, dem der jeweiligen NFC-Reader und damit auch das jeweilige NFC-Sub-System, zu dem der NFC-Reader gehört, logisch (funktechnisch) zugeordnet ist.

In einem Geschäftslokal eines beispielsweise Supermarkts können mehrere Access-Points installiert sein, wobei jeder Access-Point für die Kommunikation mit den ihm logisch zugeordneten NFC-Readern vorgesehen ist, die in einem geographischen (funktechnisch erreichbaren) Bereich um ihn herum lokalisiert sind.

Sind korrespondierend zu einer Leiterschleife der Regalschiene mehrere Regaletiketten angeordnet bzw. werden mehrere Regaletiketten gleichzeitig mit Energie über eine einzige Leiterschleife versorgt, müssen Vorkehrungen getroffen werden, um den Empfang der jeweiligen Regaletiketten-Kennung bzw. der Regaletiketten-NFC-Kennung sicherzustellen. Zu diesem Zweck können die Regaletiketten beispielsweise so programmiert sein, dass sie ihre Kennung zu zufällig ausgewählten Zeitpunkten innerhalb eines Zeitfensters (einfach oder mehrfach) abgeben, um den individuellen Empfang bei dem NFC-Reader der Regalschiene sicherzustellen. Ebenso kann bei dieser kontaktlosen Übertragung ein z.B. aus der RFID-Technologie bekanntes Anti-Kollision-Verfahren zur Anwendung kommen, um den individuellen Empfang bei dem NFC-Reader der Regalschiene sicherzustellen. Im Fachjargon spricht man bei der Erfassung der an der Regalschiene befestigten NFC-fähigen Regaletiketten vom Durchlaufen einer Polling-Loop, wobei der NFC-Reader prüft, welche Regaletiketten vorhanden sind und deren Regaletiketten-NFC-Kennung erfasst.

Die durch den NFC-Reader vom Regaletikett abgefragte Regaletiketten-Kennung wird vom NFC-Reader in einer Kommunikation mit dem Access-Point an den Server des Geschäftslokals weitergeleitet, der die Kommunikation mit den einzelnen elektronischen Regaletiketten durchführt bzw. koordiniert, um in Folge Daten von ihnen abzufragen oder Daten an sie zu übermitteln.

Der Server speichert auch die logische Verknüpfung zwischen Produkten, die auf dem jeweiligen Regal ausgestellt sind, und den dort positionierten Regaletiketten(anzeigen) und stellt somit sicher, dass die jeweilige Regaletikettenanzeige jene Information präsentiert, die zu dem korrespondierend zu dem Regaletikett positionierten Produkt gehört.

Der Server kann auch über die Position oder Erstreckung der jeweiligen Leiterschleife an der Regalschiene informiert sein und kann von den jeweiligen NFC-Reader zusammen mit der Regaletiketten-Kennung auch darüber informiert werden, welche Leiterschleife zum Bezug der Regaletiketten-Kennung von dem Regaletikett benutzt wurde. Damit lassen sich auch dreidimensionale digitale Landkarten der Positionen der Gesamtheit der Regaletiketten in einem Geschäftslokal erstellen. Dies betrifft sowohl die zum Anzeigen von Information konfigurierten Regaletiketten (Regaletikettenanzeigen) wie auch auf analoge Weise jene Regaletiketten, welche die anderen erwähnten möglichen Funktionalitäten bereitstellen.

Die Elektronik der verschiedenen Vorrichtungen bzw. Komponenten und/oder Baugruppen des Systems wie auch deren Interface usw. kann mit Hilfe unterschiedlichster passiver wie auch aktiver elektronischer Bauteile oder Funktionseinheiten auf diskrete wie auch integrierte Weise realisiert sein. Bevorzugt kommt dabei auch ein Mikroprozessor mit entsprechenden Peripheriebausteinen oder ein Mikrokontroller zum Einsatz, worauf eine Software zur Bereitstellung der verschiedenen Funktionalitäten abgearbeitet wird. Auch können sogenannte ASICs (Application-Specific Integrated Circuits) zur Anwendung kommen.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: einen Ausschnitt eines erfindungsgemäßen elektronischen Regaletiketten-Systems mit einer "intelligenten" Regalschiene;
- Fig. 2: ein Ausführungsbeispiel eines Regaletiketts als Blockschaltbild;
- Fig. 3: ein Ausführungsbeispiel der Regalschiene als Blockschaltbild mit einem NFC-Sub-System;
- Fig. 4: eine Regalschiene mit einem Regaletikett in perspektivischer Ansicht;
- Fig. 5: eine Schnittdarstellung der Regalschiene;
- Fig. 6: eine Ansicht der Regalschiene in Explosionsdarstellung;
- Fig. 7: ein Zustandsdiagramm von System-Komponenten-Aktivitäten gemäß einem ersten Ausführungsbeispiel;
- Fig. 8: ein Zustandsdiagramm von System-Komponenten-Aktivitäten gemäß einem zweiten Ausführungsbeispiel.

### Beschreibung der Ausführungsbeispiele

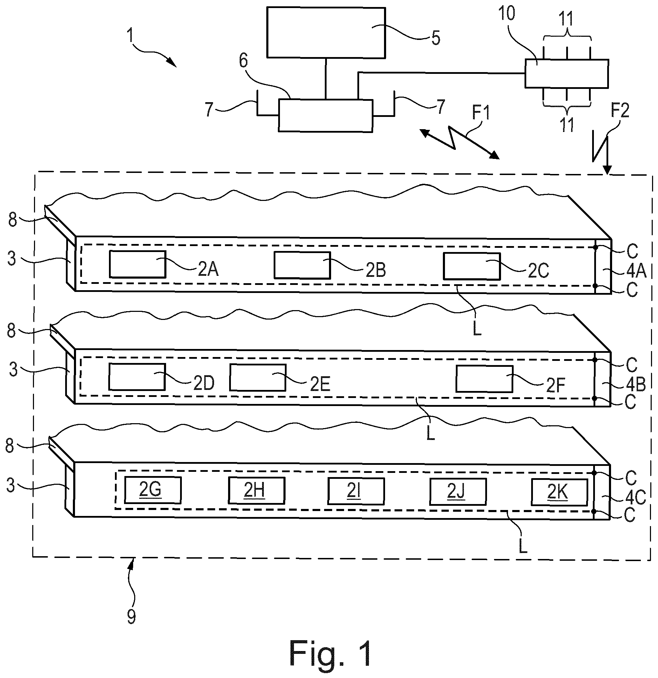

In der Figur 1 ist ein Regaletiketten-System 1 dargestellt, das eine Anzahl von identisch ausgebildeten elektronischen NFC-fähige Regaletiketten 2A-2K realisiert als Regaletikettenanzeigen umfasst, die an drei "intelligenten" Regalschienen 3 befestigt sind. Jede der Regalschienen 3 weist ein NFC-Sub-System auf. Bestandteil jedes NFC-Sub-Systems ist ein NFC-Reader 4A-4C. Der NFC-Reader 4A-4C ist seitlich in die Regalschiene 3 eingesetzt. Weiterhin weist jede Regalschiene 3 als Bestandteil des NFC-Sub-Systems eine Leiterschleife L auf, die sich entlang der gesamten Länge der Regalschiene 3 erstreckt und deren Leiterschleifen-Anschlüsse C mit dem NFC-Reader 4A-4C elektrisch leitend verbunden sind. Die Leiterschleife L bildet die Antenne des jeweiligen NFC-Readers 4A-4C und ist somit ein in der Regalschiene 3 integrierter Bestandteil des jeweiligen NFC-Readers 4A-4C. Sobald an der jeweiligen Regalschiene 3 korrespondierend deren Leiterschleife L Regaletiketten 2A-2K installiert sind und vom dortigen NFC-Reader 4A-4C erfasst wurden, bilden auch diese Regaletiketten 2A-2K einen Bestandteil des jeweiligen NFC-Sub-Systems der Regalschiene 3.

Der jeweilige NFC-Reader 4A-4C nimmt die Rolle eines Regalschienen-Controllers zur Steuerung der an seiner Regalschiene 3 installierten Regaletiketten 2A-2K ein. Dabei kommuniziert der jeweilige NFC-Reader 4A-4C gemäß einem NFC-Kommunikationsprotokoll mit den an seiner Regalschiene 3 installierten NFC-fähigen Regaletiketten 2A-2K. Hierfür sendet er mit Hilfe der Leiterschleife L ein NFC-Funk-Signal aus, das beim jeweiligen Regaletikett 2A-2K zur Energieversorgung wie auch zur Datenübertragung verwendet wird.

Ebenfalls dargestellt ist eine Datenverarbeitungseinrichtung, die im vorliegenden Fall mit Hilfe eines Server 5 realisiert ist, der kabelgebunden mit einem Access-Point 6, der beispielhaft zwei Antennen 7 aufweist, verbunden ist.

Die NFC-Reader 4A-4C sind weiterhin derart modifiziert, dass sie mit dem Access-Point 6 über erste Funksignale F1 gemäß einem proprietären Zeitschlitz-Kommunikationsverfahren im Funkkontakt stehen. Damit lassen sich von dem Server 5 aus z.B. Bildinhalte der Regaletiketten 2A-2K verändern, gegebenenfalls auch zugehörige Statusinformationen von den Regaletiketten 2A-2K abfragen und an den Server 5 übertragen.

Jede der Regalschienen 3 ist an einem individuellen Regalboden 8 an dessen Vorderkante montiert. Die drei dargestellten Regalböden 8 gehören alle zu einem nur sehr schematisch angedeuteten Regal 9. Auf den Regalböden 8 können verschiedene Produkte abgelegt werden, die jedoch im vorliegenden Fall aus Gründen der vereinfachten Darstellung nicht abgebildet sind.

Weiterhin sind die NFC-Reader 4A-4C derart ausgebildet, dass sie mit Hilfe eines zweiten Funksignals F2 ihrerseits mit Energie versorgbar sind. Zu diesem Zweck weist das System 1 einen Versorgungssender 10 auf (auch als Funk-Energiequelle bezeichnet), der dazu ausgebildet ist, mit Hilfe des fokussierten bzw. gerichteten (zweiten) Funksignals F2 mit einer bestimmten Sendeleistung, wie zum Beispiel 5 W, elektrische Energie an einen Empfänger (also an einer der NFC-Reader 4A-4C) zu übertragen. Ein solcher Versorgungssender 10 weist auch eine Vielzahl von Antennen 11 (hier sind sechs Stück dargestellt) auf, mit deren Hilfe die Richtung der Energieübertragung (letztendlich die Ausbreitung des zweiten Funksignals F2) relativ genau einstellbar ist, so dass das Energie übertragende zweite Funksignale F2 präzise bei dem jeweiligen NFC-Reader 4A-4C ankommt. Diese Energieübertragung ist unter dem Begriff "Power over WiFi" bekannt.

An dieser Stelle sei noch erwähnt, dass aus Gründen der Vereinfachung nur ein einziger Access-Point 6 und ein einziges Regal 9 visualisiert wurde, in einer realen Umgebung eines Supermarkts jedoch eine Vielzahl solcher Systemkomponenten vorhanden sind. Dort würde ein einziger Access-Point 6 eine Vielzahl von Regalen 9 in seiner Umgebung funktechnisch versorgen.

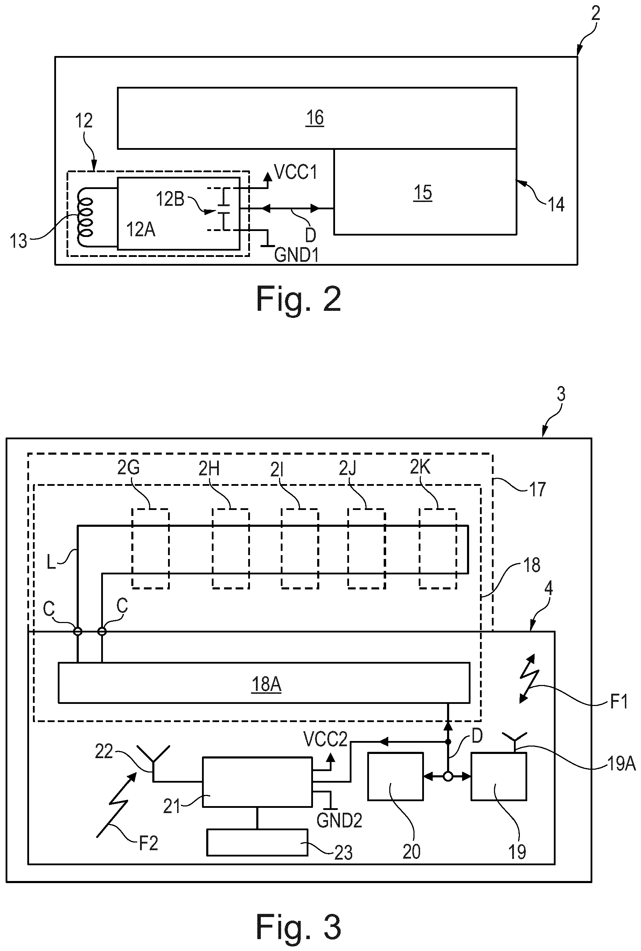

Im Folgenden ist ein Blockschaltbild der Regaletiketten 2A-2K anhand der Figur 2 erörtert, wobei hier der Einfachheit wegen das Bezugszeichen 2 für die identisch ausgebildeten Regaletiketten 2A-2K verwendet wurde.

Das Blockschaltbild zeigt eine erste NFC-Schnittstelle 12 mit ihrer Kopplungsspule bzw. Antenne 13. Mit Hilfe der Kopplungsspule 13 lässt sich das NFC-Funk-Signal von einem anderen NFC-fähigen Gerät, im vorliegenden Fall dem NFC-Reader 4A-4C empfangen. Dazu muss die Kopplungsspule 13 entsprechend nahe (einige zehntel Millimeter bis ca. 4 Millimeter) an die Leiterschleife L positioniert sein, was bei dem an einer der Regalschienen 3 angebrachten Regaletiketten 2 der Fall ist. Während der Existenz des NFC-Funk-Signals wird mit Hilfe der NFC-Schnittstelle 12 eine erste Versorgungsspannung VCC1 (gegenüber einem lokalen ersten Bezugspotential GND1) für den Betrieb des gesamten Regaletiketts 2 erzeugt.

Konkret weist die erste NFC-Schnittstelle 12 eine Elektronik 12A auf, die zum Erzeugen der ersten Versorgungsspannung VCC1 und zum Bereitstellen der NFC-Kommunikationsfähigkeit ausgebildet ist. Weiterhin weist die Elektronik 12A einen Langzeitenergiespeicher, im vorliegenden Fall realisiert als Supercap 12B, auf, mit dessen Hilfe auch bei Abwesenheit des NFC-Funk-Signals die erste Versorgungsspannung VCC1 über längere Zeiträume, als dies mit Hilfe von einem Glättungskondensator oder Stützkondensatoren (beide nicht dargestellt) der Fall wäre, aufrecht erhalten werden kann. Damit kann das Regaletikett 2 auch bei Abwesenheit des NFC-Funk-Signals in Betrieb sein und Aufgaben, wie z.B. bei entsprechender Ausbildung auch Temperaturerfassung oder Benutzereingaben abwickeln. Der Supercap 12B wird bei Vorliegen des NFC-Funk-Signals mit Hilfe der Elektronik 12A geladen.

Sobald mit Hilfe des NFC-Funk-Signals die Elektronik 12A aktiviert wurde, steht auch die erste NFC-Schnittstelle 12 zur kontaktlosen bidirektionalen Kommunikation von Daten D zur Verfügung. Bestandteil dieser Elektronik 12A ist ein NFC-Tag-Controller, der die gesamte NFC-Funktionalität bereitstellt, hier jedoch nicht im Detail dargestellt ist, jedoch in der ersten NFC-Schnittstelle 12 integriert ist.

Das Blockschaltbild zeigt auch eine mit der ersten NFC-Schnittstelle 12 verbundene Anzeigeeinheit 14, die sich in einen Electronic-Paper-Display-Controller 15, kurz EPD-Controller 15, und einen damit steuerbaren Electronic-Paper-Display-Bildschirm 16 gliedert. Mithilfe des EPD-Controllers 15 werden die über die erste NFC-Schnittstelle 12 empfangenen Daten interpretiert, gegebenenfalls die Bildinhalte des Bildschirms 16 entsprechend verändert oder auch Statusinformationen in Form von Daten D über die erste NFC-Schnittstelle 12 an den NFC-Reader 4A-4C abgegeben.

Im Folgenden ist anhand der Figur 3 ein Blockschaltbild der Regalschiene 3 erörtert. In Analogie zu der Beschreibung der Regaletiketten 2A-2K wurde auch hier das Bezugszeichen 4 für die identisch ausgebildeten NFC-Reader 4A-4C verwende.

In der Figur 3 ist angedeutet, dass die Regalschiene 3 die Regaletiketten 2G-2K trägt, es sich also um die in der Figur 1 ganz unten dargestellte Regalschiene 3 handelt. Die Regaletiketten 2G-2K sind korrespondierend zu der Position der Leiterschleife L positioniert. Im Unterschied zur Figur 1 ist auch die elektrische Verbindung der Schleifen-Anschlüsse C mit einer zweiten Elektronik 18A des NFC-Reader 4 sichtbar. Die Leiterschleife L zusammen mit der zweiten Elektronik 18A bildet eine zweite NFC-Schnittstelle 18 des NFC-Readers 4. Auch hier weist die zweite Elektronik 18A ihren eigenen NFC-Reader-Controller (nicht dargestellt) auf, der die gesamte NFC-Reader-Funktionalität bereitstellt. Mit Hilfe der zweiten NFC-Schnittstelle 18 lässt sich das NFC-Funk-Signal generieren und abgeben und damit auf kontaktlose Weise elektrische Energie an die Regaletiketten 2G-2K übertragen und eine bidirektionale Kommunikation von Daten mit ihnen durchführen.

Hervorgehoben sei an dieser Stelle, dass die Leiterschleife L, obwohl sie ein Bestandteil des NFC-Readers 4 ist, außerhalb des NFC-Readers 4 in der mechanischen Struktur der Regalschiene 3 aufgenommen ist. Dies ist durch eine die Leiterschleife L einfassende und an den NFC-Reader 4 anschließende Struktur 17 der Regalschiene 3 symbolisiert.

Der NFC-Reader 4 weist weiterhin ein Accesspoint-Kommunikationsmodul 19 auf, das zum funkbasierten Kommunizieren mit dem in der Figur 1 dargestellten Access-Point 6 ausgebildet ist. Das Accesspoint-Kommunikationsmodul 19 weist zu diesem Zweck eine dafür ausgebildete Elektronik (nicht im Detail dargestellt) und eine Antennenkonfiguration 19A, die auch mehrere Antennen umfassen kann, auf. Zur Steuerung der internen Abläufe und der Kommunikation gemäß dem erwähnten proprietären Zeitschlitz-Kommunikationsverfahren mit dem Access-Point 6 weist die Versorgung-Einrichtung 4 eine Steuereinheit 20 auf. Die Steuereinheit 20 ist mit Hilfe eines Mikrocontrollers realisiert, der über einen bidirektionalen Datenbus mit der zweiten NFC-Schnittstelle 18 und dem Accesspoint-Kommunikationsinterface 19 verbunden ist.

Zur Realisierung der "Power over WIFI" Energieübertragung weist der NFC-Reader 4 einen zum Empfangen des zweiten Funksignals F2 geeigneten Versorgungsempfänger 21 auf, der mit seiner Antennenkonfiguration 22 (die mehrere Antennen aufweisen kann) und einer Elektronik (nicht im Detail dargestellt) ausgerüstet ist, die dazu ausgebildet ist, das zweite Funksignal F2 zu empfangen und die damit übertragene Energie in einem internen elektrischen Energiespeicher 23 (aufladbare Batterie, Akkumulator oder Supercap usw.) zu speichern und damit eine zweite Versorgungsspannung VCC2 gegenüber einem zweiten Bezugspotential GND2 zur elektrischen Versorgung des NFC-Readers 4 zu generieren.

Die Steuereinheit 20 ist mit ihrem Datenbus auch mit dem Versorgungsempfänger 21 verbunden.

Im Betrieb kann der NFC-Reader 4 beispielsweise mit Hilfe seiner Steuereinheit 20 den Ladezustand des Energiespeichers 23 abfragen bzw. überwachen. Sobald der Ladezustand unter ein bestimmtes Niveau sinkt, kann die Steuereinheit 20 mit Hilfe des ersten Funksignals F1 eine (Neu-)Aufladung anfordern. Diese Anforderung wird vom Access-Point 6 empfangen und kann je nach Implementierung direkt an den Versorgungssender 10 weitergeleitet werden oder unter Einbeziehung des Servers 5 an den Versorgungssender 10 weitergeleitet werden. Da im System 1 (z.B. dem Server 5) die genaue geographische Position (die dreidimensionalen Koordinaten) jedes der NFC-Reader 4 im Geschäftslokal sowie ihre eindeutige Reader-Kennung bekannt ist, kann der Versorgungssender 10 das zweite Funksignal F2 präzise gerichtet hin zur Position der jeweiligen das Aufladen anfordernden NFC-Readers 4 aussenden. Dort wird das zweite Funksignal F2 empfangen und die damit übertragene Energie zur Aufladung des internen Energiespeichers 23 verwendet.

Die hier beschriebene Regalschiene 3 ist also mit Hilfe ihres NFC-Sub-Systems zur kontaktlosen Kommunikation mit den an ihr installierten Regaletiketten 2 und einem ihr funktechnisch zugeordneten Access-Point 6 und zur kontaktlosen Energiebereitstellung im Sinne von Energiespeicherung für den eigenen Betrieb des NFC-Readers 4 wie auch für die kontaktlose Energieversorgung der jeweiligen Regaletiketten 2 ausgebildet. .

An dieser Stelle sei auch erwähnt, dass der Versorgungssender 10 auch in dem Access-Point 6 verbaut sein kann.

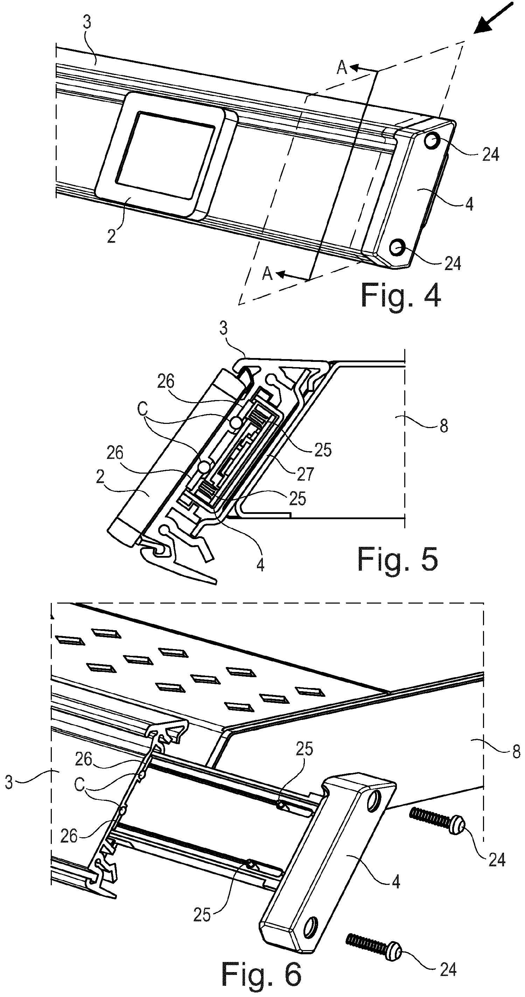

In weitere Folge ist anhand der Figuren 4-6 auf die Struktur der "intelligenten" Regalschiene 3 eingegangen. So zeigt die Figur 4 eine Regalschiene 3 mit einem an ihr befestigten Regaletikett 2 und dem seitlich in die Regalschiene 3 eingesetzten NFC-Reader 4, der mit Schrauben 24 in der Struktur der Regalschiene 3 befestigt ist. Diese Regalschiene 3 weist bespielhaft eine Länge von ca. 3 m, eine Höhe von ca. 4,5 cm und eine Dicke von 1,2 cm auf.

Die Figur 5 zeigt einen Schnitt durch die Regalschiene 3 gemäß einer in der Figur 4 eingezeichneten Schnittfläche A-A, die quer (normal auf die Vorderseite der Regalschiene 3 ausgerichtet) durch die Regalschiene 3 orientiert ist und an jener Stelle verläuft, an der Kontaktelemente 25 des NFC-Readers 4 ausgebildet sind, die zur Kontaktierung der in der Regalschiene 3 verlaufenden Leiterschleife L des NFC-Readers 4 dienen. Die Kontaktelemente 25 kontaktieren in dieser Ansicht Kontaktfahnen 26, die ihrerseits wieder mit den Leiterschleifen-Anschlüssen C in Kontakt stehen. Auf die Kontaktfahnen 26 kann jedoch verzichte werden, wenn eine andere Geometrie gewählt wird, sodass die Leiterschleifen-Anschlüsse C auch direkt mit den Kontaktelementen 25 kontaktiert werden können. Weiterhin ist ein an der Rückseite der Regalschiene 3 ausgebildetes Abschirmblech 27 zu sehen, welches sich analog zur Leiterschleife L ebenfalls entlang der gesamten Regalschiene 3 erstreckt.

Die Figur 6 zeigt den an einem Schienen- bzw. Gleitmechanismus befestigten NFC-Reader 4, wobei der Gleitmechanismus teilweise aus einem zu seiner Aufnahme ausgebildeten Schacht der Regalschiene 3 herausgezogenen ist.

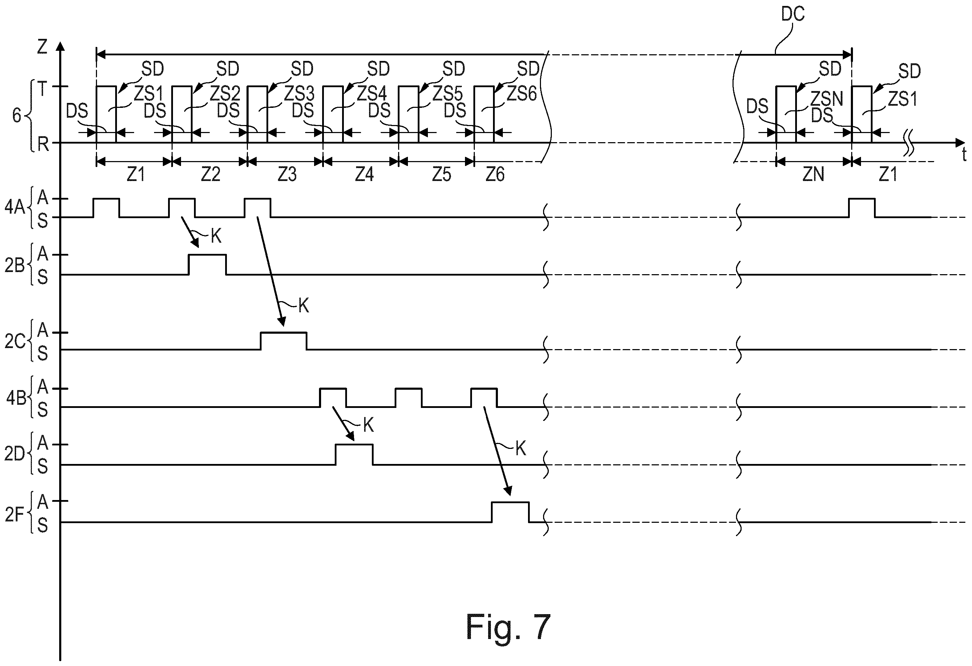

Nachfolgend ist mit Verweis auf die Figuren 7-8 auf die Adressierung der Regaletiketten 2 eingegangen. Die Figuren 7-8 zeigen jeweils ein Zustandsdiagramm, wobei auf der Abszisse die Zeit t und auf der Ordinate Zustände Z der Systemkomponenten aufgetragen ist

Die Figur 7 zeigt eine zeitliche Systematik im Zeitschlitz-Kommunikationsverfahren, bei dem sich fortwährend wiederholend innerhalb einer Zeitschlitzzyklus-Dauer DC (z.B. 15 Sekunden) N (z.B. 256) Zeitschlitze Z1 ... ZN mit identischer Zeitschlitzdauer DS (z.B. ca. 58 Millisekunden) zur Verfügung stehen. Während der Zeitschlitzzyklus-Dauer DC wechselt der Access-Point 6 zwischen einem Sendezustand T und einem Ruhezustand R. Der Sendezustand T wird immer zu Beginn eines Zeitschlitzes Z1 ... ZN eingenommen und für eine Synchronisations-Datensignal-Dauer DSD (oder Sendezeitdauer DSD) des Synchronisations-Datensignals SD aufrecht erhalten, um mit dem jeweiligen Synchronisations-Datensignal SD das jeweilige zutreffende Zeitschlitzsymbol ZS1, ZS2, ... ZSN zu senden. Als das jeweilige Zeitschlitzzyklussymbol ZS1 ...ZSN kommt die laufende Nummer des jeweiligen Zeitschlitzes Z1 ... ZN in der Reihenfolge des Auftretens der Zeitschlitz Z1 ... ZN zum Einsatz.

Um eines der Regaletiketten 2A-2K individuell zu adressieren, ggf. auch mit Daten zu versorgen, werden in dem Synchronisations-Datensignal SD des betreffenden Zeitschlitzes Z1-ZN vom Access-Point 6 Adressdaten AD, ggf. auch Befehlsdaten CD eingebettet.

Im vorliegenden Ausführungsbeispiel sei angenommen, dass alle NFC-Reader 4A-4C funktechnisch bei dem Access-Point 6 registriert sind, also gemäß dem Zeitschlitz-Kommunikationsverfahren mit ihm kommunizieren können. Jeder NFC-Reader 4A-4C hat initial die an seiner Regalschien 3 angebrachten Regaletiketten 2A-2C, 2D-2F und 2G-2K mit Hilfe einer NFC-Polling-Loop erfasst und ihre individuelle Regaletikett-NFC-Kennung gespeichert, um mit ihnen eine NFC-Kommunikation abzuwickeln. Zudem speichert jeder NFC-Reader 4A-4C welches der an seiner Regalschiene 3 angebrachten Regaletikette 2A-2C, 2D-2F und 2G-2K welchem der Zeitschlitze Z1-ZN zugeordnet ist. Diese im NFC-Reader 4A-4C gespeicherte Datenstruktur der Zuordnung der Regaletiketten 2A-2K verwendet auch der Server 5, um die Regaletiketten 2A-2K individuell zu adressieren, wobei einem einzigen Zeitschlitz Z1-ZN auch mehrere Regaletiketten 2A-2K zugeordnet sein können.

So sei im vorliegenden Fall angenommen, dass beispielsweise die Regaletiketten 2A-2C chronologisch den ersten drei Zeitschlitzen Z1-Z3 zugeordnet sind. Die Einträge in der Datenstruktur des NFC-Readers 4A veranlassen ihn nun, zeitgerecht zum Auftreten des Synchronisations-Datensignals SD des ersten, zweiten und dritten Zeitschlitzes Z1, Z2 und Z3 von seinem Schlaf-Zustand S in seinen Aktiv-Zustand A zu wechseln. Hierbei kann es von Vorteil sein, wenn die Dauer das Aktiv-Zustands die Synchronisations-Datensignal-Dauer DSD geringfügig überspannt. Im Aktiv-Zustand wird das betreffende Synchronisations-Datensignal SD empfangen, der NFC-Reader 4A stellt seinen Synchronismus auf Grundlage des in der jeweiligen Synchronisations-Datenstruktur SD enthaltenen Zeitschlitzsymbols ZS1, ZS2, und ZS3 fest und prüft, ob das dem jeweiligen Zeitschlitz Z1, Z2 oder Z3 zugeordnete Regaletikett 2A, 2B oder 2C vom Server 5 mit Hilfe der Adressdaten AD individuell adressiert ist.

Im vorliegende Fall sei angenommen, dass die Regaletiketten 2B und 2C adressiert sind, was zu einer im vorliegenden Fall zeitversetzten NFC-Kommunikation zwischen dem NFC-Reader 4A und den beiden Regaletiketten 2B und 2C führt, was durch die Pfeile K visualisiert ist. Dabei wird zunächst das NFC-Funk-Signal erzeugt und die erste Versorgungsspannung VCC 1 generiert. Dies führt dazu, dass das jeweilige Regaletikett 2B bzw. 2C seinen Schlaf-Zustand S verlässt und in seinen Aktiv-Zustand A wechselt. Dann werden die jeweiligen Befehlsdaten CD an das adressierte Regaletikett 2B und 2C übergeben und dort verarbeitet.

Analog verhält es sich mit dem zweiten NFC-Reader 4B, dessen Regaletiketten 2D, 2E und 2F dem vierten bis sechsten Zeitschlitz Z4, Z5 u. Z6 zugeordnet sind, wobei im vorliegenden Fall angenommen ist, dass nur das vierte und das sechste Regaletikett 2D u. 2F adressiert sind.

Gleiches gilt auf analoge Weise für den dritten NFC-Reader 4C, wobei hier angenommen sein, dass keines seiner Regaletiketten 2G-2K adressiert ist.

Die nicht adressierten Regaletiketten 2A, 2E und 2G-2K verharren innerhalb des visualisierten Zeitschlitzzyklus folglich alle in ihrem energiesparenden Schlaf-Zustand S. Auch die NFC-Reader 4A-4C verharren in Zeitschlitzen Z1-ZN, für die keine dem jeweiligen Zeitschlitz Z1-ZN zugeordneten Regaletiketten in der Datenstruktur vermerkt sind, in ihrem Schlaf-Zustand S.

Weiterhin sei erwähnt, dass die NFC-Reader 4A-4C auch innerhalb des jeweiligen Zeitschlitzes Z1-ZN durchgängig oder mehrfach im Aktiv-Zustand A sein können, wenn z.B. eine Rückmeldung des jeweiligen Regaletiketts 2A-2K im betreffenden Zeitschlitz erfolgen muss oder auch zusätzliche Daten in diesem Zeitschlitz mit den betroffenen Regaletikett 2A-2K zu übertragen sind. Auch können sich Datenübertragungen zwischen dem Access-Point 6 und dem jeweiligen NFC-Reader 4A-4C über mehrere Zeitschlitze Z1-ZN erstrecken, was zu einem mehrfachen Vorliegen des Aktiv-Zustands A innerhalb des Zeitschlitzzyklus bei dem betroffenen NFC-Reader 4A-4C führen kann.

Auch kann die Datenübertragung im NFC-Sub-System bei erkannter Adressierung eines Regaletiketts 2A-2K in Echtzeit im jeweiligen Zeitschlitz erfolgen, also nicht wie in der Figur 7 veranschaulicht zeitversetzt zum jeweiligen Zeitschlitz.

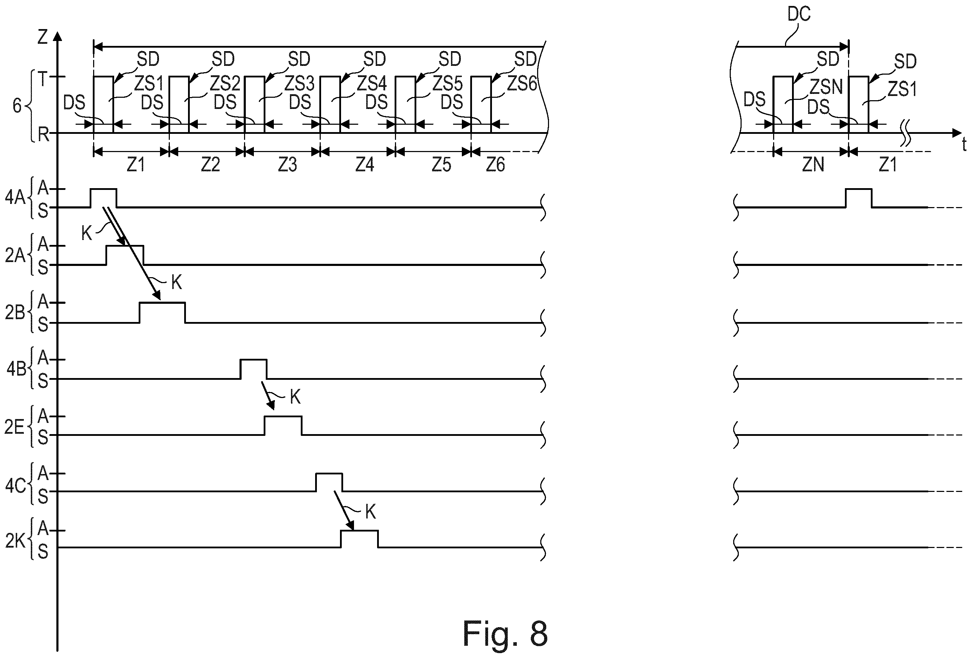

Im Unterschied zu dem vorangehend erörterten Ausführungsbeispiel sei nun gemäß einem weiteren (zweiten) Ausführungsbeispiel angenommen und mit Hilfe der Figur 8 visualisiert, dass jeder der NFC-Reader 4A-4C einem bestimmten Zeitschlitz Z1-ZN zugeordnet ist, wie z.B. der erste NFC-Reader 4A dem ersten Zeitschlitz Z1, der zweite NFC-Reader 4B dem dritten Zeitschlitz Z3 und der dritte NFC-Reader 4C dem vierten Zeitschlitz Z4. Erst über diese Zuordnung der NFC-Reader 4A-4C zu den Zeitschlitzen ergibt sich zwangsweise die Zuordnung der Regaletiketten 2A-2K zu den jeweiligen Zerschlitzen Z1-ZN. Hier sind also die Regaletiketten 2A-2C dem ersten Zeitschlitz Z1, die Regaletiketten 2D-2F dem dritten Zeitschlitz Z3 und die Regaletiketten 2G-2K dem vierten Zeitschlitz Z4 zugeordnet. Um in diesem System 1 ein Regaletikett 2A-2K adressieren zu können, muss der Server 5 wissen, welcher NFC-Reader 4A-4C welches Regaletikett 2A-2K funktechnisch in einer NFC-Kommunikation bedienen kann, um dann über die Adressierung des jeweiligen NFC-Readers 4A-4C im Zeitschlitz-Kommunikationsverfahren indirekt das dort verfügbare Regaletikett 2A-2C, 2D-2F oder 2G-2K zu adressieren. Diese Zuordnung ist in einer Datenbank des Servers 5 gespeichert. Die Datenstruktur des NFC-Readers 4A-4C speichert das Zeitschlitzsymbol ZS1-ZSN jenes Zeitschlitzes Z1-ZN, dem der betreffende NFC-Reader 4A-4C zugeordnet ist, und die Adressen (Regaletiketten-Kennungen) der über ihn adressierbaren Regaletiketten 2A-2C, 2D-2F oder 2G-2K. Auch sind hier die Regaletikett-NFC-Kennungen für die NFC-Kommunikation im NFC-Sub-System gespeichert.

Die Einträge in der Datenstruktur des ersten NFC-Readers 4A veranlassen ihn nun, zeitgerecht zum Auftreten des Synchronisations-Datensignals SD des ersten Zeitschlitzes Z1 von seinem Schlaf-Zustand S in seinen Aktiv-Zustand A zu wechseln, seinen Synchronismus festzustellen und zu prüfen, ob er von dem Server 5 zwecks indirekter Adressierung von Regaletiketten adressiert wird. Ist dies der Fall, wird weiter geprüft ob der Server auch eines der Regaletiketten 2A-2C adressiert und, soweit diese Adressierung vorliegt, ggf. in einer NFC-Kommunikation des NFC-Readers 2A mit diesem adressierten Regaletikett ein Datenverkehr abgewickelt. Im vorliegenden Fall sei angenommen, dass im visualisierten Zeitschlitzzyklus nur die Regaletiketten 2A und 2B adressiert wurden, was zu einer sequentiellen NFC-Kommunikation in NFC-Sub-System mit den Regaletiketten 2A und 2B führt, was durch die Pfeile K visualisiert ist.

Gleiches gilt sinngemäß für den zweiten NFC-Reader 4B, der im Zeitraum des Auftretens des Synchronisations-Datensignals SD des dritten Zeitschlitzes Z1 von seinem Schlaf-Zustand S in seinen Aktiv-Zustand A wechselt, seinen Synchronismus feststellt und seine Prüfung durchführt, ob er vom Server 5 zwecks indirekter Adressierung von Regaletiketten adressiert wird. Hier sei angenommen, dass nur das fünfte Regaletikett 2E adressiert ist, was mit diesem zu einer NFC-Kommunikation im NFC-Subsystem führt.

Ähnlich verhält es sich mit dem dritten NFC-Reader 4C, dessen Einträge in seiner Datenstruktur ihn veranlassen, zeitgerecht zum Auftreten des Synchronisations-Datensignals SD des vierten Zeitschlitzes Z4 von seinem Schlaf-Zustand S in seinen Aktiv-Zustand A zu wechseln, seinen Synchronismus festzustellen und zu prüfen, ob er von dem Server 5 zwecks indirekter Adressierung von Regaletiketten adressiert wird, um bei Vorliegen einer solchen Adressierungen Folge eines seiner Regaletiketten 2G-2K zu adressieren. Hier sei angenommen, dass nur das elfte Regaletikett 2K adressiert wurde, was in Folge mit diesem zu einer NFC-Kommunikation im NFC-Sub-System führt.

Wie im Vergleich der Zustandsdiagramme der Figuren 7 und 8 ersichtlich ist, müssen die NFC-Reader 4A-4C in jedem Zeitschlitzzyklus bei Implementierung gemäß dem zweiten Ausführungsbeispiel weniger oft aktiv sein, was im Vergleich der beiden Ausführungsbeispiele hinsichtlich der Energieeffizienz das zweite Ausführungsbeispiel über das erste Ausführungsbeispiel obsiegen lässt.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen, der durch die beigefügten Ansprüche definiert ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Elektronisches Regaletiketten-System (1),
- wobei das System (1) einen Server (5) aufweist, der dazu ausgebildet ist, eine Vielzahl von Regaletiketten (2A-2K) individuell zu adressieren, um mit ihnen auf adressierte Weise Daten zu kommunizieren, und
- wobei das System (1) zumindest einen Access-Point (6) aufweist, der mit dem Server (5) verbunden ist und zur funktechnischen Kommunikation der Daten mit den Regaletiketten (2A-2K) ausgebildet ist, **dadurch gekennzeichnet, dass** das System an einer Regalschiene (3) eines Regals (9) ein Near-Field-Communication-, abgekürzt NFC-, Sub-System aufweist, wobei das NFC-Sub-System derart charakterisiert ist, dass
- die Regalschiene (3) einen NFC-Reader (4A-4C) aufweist, der zur funkbasierten Kommunikation mit dem Access-Point (6) ausgebildet ist, und dass
- zumindest eine an den NFC-Reader (3) angeschlossene Leiterschleife (L), die entlang der Regalschiene (3) ausgebildet ist und zur NFC-Kommunikation mit einem NFC-fähigen Regaletikett (2A-2K) dient, vorgesehen ist, wobei
- korrespondierend zu der Leiterschleife (L) zumindest ein NFC-fähiges Regaletikett (2A-2K) an der Regalschiene (3) angebracht ist, und wobei
- der NFC-Reader (4) zur NFC-Kommunikation der Daten mit dem durch den Server (5) adressierten Regaletikett (2A-2K) ausgebildet ist.

2. Elektronisches Regaletiketten-System (1) nach Anspruch **1,** wobei der Access-Point (6) und der NFC-Reader (4A-4C)) zur funkbasierten Kommunikation gemäß einem Zeitschlitz-Kommunikationsverfahren ausgebildet sind, wobei bei dem Zeitschlitz-Kommunikationsverfahren in sich wiederholender Folge eine Anzahl von Zeitschlitzen (Z1-ZN) pro Zeitschlitzzyklus zur Kommunikation bereitstehen, bevorzugt jeder Zeitschlitz (Z1-ZN) durch ein eindeutiges Zeitschlitzsymbol (ZS1-ZSN) gekennzeichnet ist.

3. Elektronisches Regaletiketten-System (1) nach Anspruch 2, wobei
- der NFC-Reader (4A-4C) eine Datenstruktur speichert, die eine Zuordnung eines an seiner Regalschiene (3) befestigten Regaletiketts (2A-2K) zu einem der Zeitschlitze (Z1-ZN) repräsentiert, und
- wobei der NFC-Reader (4) dazu ausgebildet ist, jenen Zeitschlitz (Z1-ZN), dem laut Datenstruktur ein Regaletikett (2A-2K) zugeordnet ist, daraufhin zu prüfen, ob das an seiner Regalschiene (3) befestigte Regaletikett (2A-2K) durch den Server (5) adressiert ist.

4. Elektronisches Regaletiketten-System (1) nach Anspruch 3, wobei der NFC-Reader (4A-4C) dazu ausgebildet ist, bei Vorliegen eines positiven Prüfungsergebnisses Daten zwischen dem adressierten Regaletikett (2A-2K) und dem Access-Point (6) im laut Datenstruktur für das adressierte Regaletikett (2A-2K) bestimmten Zeitschlitz (Z1-ZN) zu übertragen.

5. Elektronisches Regaletiketten-System (1) nach einem der Ansprüche 3-4, wobei
- der NFC-Reader (4A-4C) einen energiesparenden Schlaf-Zustand, in dem keine Kommunikationsbereitschaft zur Kommunikation mit dem Access-Point (6) besteht, und einen Aktiv-Zustand, in dem eine Kommunikationsbereitschaft mit dem Access-Point (6) besteht, aufweist und wobei
- der NFC-Reader (4A-4C) dazu ausgebildet ist, zeitgerecht zum Auftreten jenes Zeitschlitzes (Z1-ZN), dem laut Datenstruktur ein Regaletikett (2A-2K) zugeordnet ist, von dem Schlaf-Zustand in den Aktiv-Zustand zu wechseln.

6. Elektronisches Regaletiketten-System (1) nach einem der vorangehenden Ansprüche 3-5, wobei der Server (5) in einer Datenbank eine individuelle Regaletiketten-Kennung jedes Regaletiketts (2A-2K) speichert und das jeweilige Regaletikett (2A-2K) an Hand der Regaletiketten-Kennung direkt adressiert.

7. Elektronisches Regaletiketten-System (1) nach Anspruch 2, wobei
- der NFC-Reader (4A-4C) einem der Zeitschlitze (Z1-ZN) zugeordnet ist und eine Datenstruktur speichert, welche die an der Regalschiene (3) des NFC-Readers (4A-4C) befestigten Regaletiketten (2A-2K) repräsentiert, und wobei
- der NFC-Reader (4A-4C) dazu ausgebildet ist, jenen Zeitschlitz (Z1-ZN), dem er selbst zugeordnet ist, daraufhin zu prüfen, ob das an seiner Regalschiene (3) befestigte Regaletikett (2A-2K) durch den Server (5) adressiert ist.

8. Elektronisches Regaletiketten-System (1) nach Anspruch 7, wobei der NFC-Reader (4A-4C) dazu ausgebildet ist, bei Vorliegen eines positiven Prüfungsergebnisses im für ihn bestimmten Zeitschlitz (Z1-ZN) Daten zwischen dem adressierten Regaletikett (2A-2K) und dem Access-Point (6) zu übertragen.

9. Elektronisches Regaletiketten-System (1) nach einem der Ansprüche 7-8, wobei
- der NFC-Reader (4A-4C) einen energiesparenden Schlaf-Zustand, in dem keine Kommunikationsbereitschaft zur Kommunikation mit dem Access-Point (6) besteht, und einen Aktiv-Zustand, in dem eine Kommunikationsbereitschaft mit dem Access-Point (6) besteht, aufweist und wobei
- der NFC-Reader (4A-4C) dazu ausgebildet ist, zeitgerecht zum Auftreten jenes Zeitschlitzes (Z1-ZN), dem er selbst zugeordnet ist, von dem Schlaf-Zustand in den Aktiv-Zustand zu wechseln.

10. Elektronisches Regaletiketten-System (1) nach einem der Ansprüche 7-9, wobei der Server (5) in einer Datenbank eine Verknüpfung zwischen einer Reader-Kennung eines NFC-Readers (4A-4C) und einer Regaletiketten-Kennung jenes Regaletiketts (2A-2K), das an der Regalschiene (3) des NFC-Readers (4A-4C) installiert ist, speichert und ein Regaletikett (2A-2K) indirekt über die Verknüpfung der Regaletiketten-Kennung des zu adressierenden Regaletiketts (2A-2K) mit der Reader-Kennung adressiert.

11. Elektronisches Regaletiketten-System (1) nach einem der vorangehenden Ansprüche, wobei das Regaletikett (2A-2K) eine energiesparende Anzeigeeinheit (16), insbesondere basierend auf Electronic-Ink- bzw. Electronic-Paper-Technologie usw., aufweist.

12. Elektronisches Regaletiketten-System (1) nach einem der vorangehenden Ansprüche, wobei das Regaletikett (2A-2K) einen aufladbaren, elektrischen Energiespeicher (12B) aufweist und zum kontaktlosen Aufladen des Energiespeichers (12B) mit Hilfe eines NFC-Funk-Signals des NFC-Readers (4A-4C) ausgebildet ist.

13. Verfahren zum Betreiben eines elektronischen Regaletiketten-Systems (1) nach einem der Ansprüche 1 bis 12, wobei gemäß dem Verfahren die Daten zwischen dem NFC-Reader (4A-4C) und dem durch den Server (5) adressierten Regaletikett (2A-2K) mittels NFC-Kommunikation kommuniziert werden.

14. Verwendung eines Near-Field-Communication-, abgekürzt NFC-, Sub-Systems an einer Regalschiene (3) eines Regals (9) eines elektronischen Regaletiketten-Systems (1) nach einem der Ansprüche 1 bis 12, wobei das NFC-Sub-System dazu verwendet wird, in einer NFC-Kommunikation Daten mit einem durch einen Server (5) des Systems (1) adressierten Regaletikett (2A-2K) zu kommunizieren.

## Claims

1. An electronic shelf label system (1),
- wherein the system (1) comprises a server (5) adapted to individually address a plurality of shelf labels (2A-2K) to communicate data with them in an addressed manner, and
- wherein the system (1) comprises at least one access point (6) which is connected to the server (5) and is designed for radio-technical communication of the data with the shelf labels (2A-2K),
**characterized in that**
the system comprises a near-field communication, abbreviated NFC, sub-system on a shelf rail (3) of a shelf (9), the NFC sub-system being **characterized in** such a way that
- the shelf rail (3) comprises an NFC reader (4A-4C) which is designed for radio-based communication with the access point (6), and **in that**
- at least one conductor loop (L) connected to the NFC reader (3), which is formed along the shelf rail (3) and is used for NFC communication with an NFC-capable shelf label (2A-2K), is provided, wherein
- at least one NFC-capable shelf label (2A-2K) is attached to the shelf rail (3) corresponding to the conductor loop (L), and wherein
- the NFC reader (4) is designed for NFC communication of the data with the shelf label (2A-2K) addressed by the server (5).

2. Electronic shelf label system (1) according to claim 1, wherein the access point (6) and the NFC reader (4A-4C) are designed for radio-based communication according to a time slot communication method, wherein in the time slot communication method a number of time slots (Z1-ZN) per time slot cycle are available for communication in a repeating sequence, preferably each time slot (Z1-ZN) is **characterized by** a unique time slot symbol (ZS1-ZSN).

3. Electronic shelf label system (1) according to claim 2, wherein
- the NFC reader (4A-4C) stores a data structure which represents an assignment of a shelf label (2A-2K) attached to its shelf rail (3) to one of the time slots (Z1-ZN), and
- wherein the NFC reader (4) is designed to check the time slot (Z1-ZN) to which a shelf label (2A-2K) is assigned according to the data structure as to whether the shelf label (2A-2K) attached to its shelf rail (3) is addressed by the server (5).

4. Electronic shelf label system (1) according to claim 3, wherein the NFC reader (4A-4C) is designed to transmit data between the addressed shelf label (2A-2K) and the access point (6) in the time slot (Z1-ZN) determined according to the data structure for the addressed shelf label (2A-2K) if a positive check result is present.

5. The electronic shelf label system (1) according to any one of claims 3-4, wherein
- the NFC reader (4A-4C) comprises an energy-saving sleep state, in which there is no communication readiness for communication with the access point (6), and an active state, in which there is a communication readiness with the access point (6), and wherein
- the NFC reader (4A-4C) is designed to switch from the sleep state to the active state in time for the occurrence of the time slot (Z1-ZN) to which a shelf label (2A-2K) is assigned according to the data structure.

6. The electronic shelf label system (1) according to any one of the preceding claims 3-5, wherein the server (5) stores in a database an individual shelf label identifier of each shelf label (2A-2K) and directly addresses the respective shelf label (2A-2K) based on the shelf label identifier.

7. Electronic shelf label system (1) according to claim 2, wherein
- the NFC reader (4A-4C) is assigned to one of the time slots (Z1-ZN) and stores a data structure which represents the shelf labels (2A-2K) attached to the shelf rail (3) of the NFC reader (4A-4C), and wherein
- the NFC reader (4A-4C) is designed to check the time slot (Z1-ZN) to which it is itself assigned as to whether the shelf label (2A-2K) attached to its shelf rail (3) is addressed by the server (5)

8. The electronic shelf label system (1) according to claim 7, wherein the NFC reader (4A-4C) is designed to transmit data between the addressed shelf label (2A-2K) and the access point (6) if there is a positive check result in the time slot (Z1-ZN) intended for it.

9. The electronic shelf label system (1) according to any one of claims 7-8, wherein
- the NFC reader (4A-4C) comprises an energy-saving sleep state, in which there is no communication readiness for communication with the access point (6), and an active state, in which there is a communication readiness with the access point (6), and wherein
- the NFC reader (4A-4C) is designed to switch from the sleep state to the active state in time for the occurrence of the time slot (Z1-ZN) to which it itself is assigned.

10. The electronic shelf label system (1) according to any one of claims 7-9, wherein the server (5) stores in a database a link between a reader identifier of an NFC reader (4A-4C) and a shelf label identifier of the shelf label (2A-2K) which is installed on the shelf rail (3) of the NFC reader (4A-4C), and addresses a shelf label (2A-2K) indirectly via the link between the shelf label identifier of the shelf label (2A-2K) to be addressed and the reader identifier.

11. Electronic shelf label system (1) according to any one of the preceding claims, wherein the shelf label (2A-2K) comprises an energy-saving display unit (16), in particular based on electronic ink or electronic paper technology, etc.

12. Electronic shelf label system (1) according to one of the preceding claims, wherein the shelf label (2A-2K) comprises a rechargeable electrical energy storage device (12B) and is designed for contactless charging of the energy storage device (12B) by means of an NFC radio signal of the NFC reader (4A-4C).

13. A method of operating an electronic shelf label system (1) according to any one of claims 1 to 12, wherein according to the method the data is communicated between the NFC reader (4A-4C) and the shelf label (2A-2K) addressed by the server (5) by means of NFC communication.

14. Use of a near-field communication, abbreviated NFC, sub-system on a shelf rail (3) of a shelf (9) of an electronic shelf label system (1) according to any one of claims 1 to 12, wherein the NFC sub-system is used to communicate data in an NFC communication with a shelf label (2A-2K) addressed by a server (5) of the system (1).

## Revendications

1. Système (1) électronique d'étiquettes d'étagères,
le système (1) comportant un serveur (5), qui est conçu pour adresser individuellement une pluralité d'étiquettes d'étagères (2A-2K) pour communiquer avec elles de manière adressée et
- le système (1) comportant au moins un point d'accès (6), qui est connecté avec le serveur (5) et qui est conçu pour la communication radiotechnique des données avec les étiquettes d'étagères (2A à 2K), **caractérisé en ce que** le système comporte sur un rail d'étagère (3) d'une étagère (9) un sous-système de communication en champ proche (Near Field Communication), en abrégé sous-système NFC, le sous-système NFC étant caractérisé de telle sorte
- que le rail d'étagère (3) comporte un lecteur NFC (4A à 4C), qui est conçu pour la communication basée sur la transmission radio avec le point d'accès (6) et
- qu'il soit prévu au moins une boucle conductrice (L) raccordée sur le lecteur NFC (3), qui est conçue le long du rail d'étagère (3) et qui sert à la communication NFC avec une étiquette d'étagère (2A à 2K) apte à la NFC,
- en correspondance avec la boucle conductrice (L), au moins une étiquette d'étagère (2A à 2K) apte à la NFC étant montée sur le rail d'étagère (3) et
- que le lecteur NFC (4) soit conçu pour la communication NFC des données avec l'étiquette d'étagère (2A à 2K) adressée par le serveur (5).

2. Système (1) électronique d'étiquettes d'étagères selon la revendication 1, pour la communication basée sur la transmission radio, le point d'accès (6) et le lecteur NFC (4A à 4C)) étant conçus selon un procédé de communication par créneau temporel, lors du procédé de communication par créneau temporel, un nombre de créneaux temporels (Z1 à ZN) étant à disposition en séquences réitérées par cycle de créneaux temporels pour la communication, de préférence chaque créneau temporel (Z1 à ZN) étant **caractérisé par** un symbole (ZS1 à ZSN) de créneau temporel univoque.

3. Système (1) électronique d'étiquettes d'étagères selon la revendication 2,
- le lecteur NFC (4A à 4C) mémorisant une structure de données qui représente une affectation d'une étiquette d'étagère (2A à 2K) fixée sur son rail d'étagère (3) à l'un des créneaux temporels (Z1 à ZN) et
- le lecteur NFC (4) étant conçu pour vérifier le créneau temporel (Z1 à ZN), auquel selon la structure de données est affectée une étiquette d'étagère (2A à 2K) pour savoir si l'étiquette d'étagère (2A à 2K) fixée sur son rail d'étagère (3) est adressée par le serveur (5).

4. Système (1) électronique d'étiquettes d'étagères selon la revendication 3, en présence d'un résultat de vérification positif, le lecteur NFC (4A à 4C) étant conçu pour transmettre des données entre l'étiquette d'étagère (2A et 2K) adressée et le point d'accès (6) dans le créneau temporel (Z1 à ZN) déterminé selon la structure de données pour l'étiquette d'étagère (2A à 2K) adressée.

5. Système (1) électronique d'étiquettes d'étagères selon l'une quelconque des revendications 3 ou 4,
- le lecteur NFC (4A à 4C) présentant un état de sommeil économiseur d'énergie, dans lequel il n'existe aucune disponibilité de communication, pour la communication avec le point d'accès (6) et un état actif, dans lequel il existe une disponibilité de communication avec le point d'accès (6) et
- le lecteur NFC (4A à 4C) étant conçu pour passer du mode sommeil en mode actif en temps utiles lors de la survenue du créneau temporel (Z1 à ZN), auquel selon la structure de données est attribuée une étiquette d'étagère (2A-2K).

6. Système (1) électronique d'étiquettes d'étagères selon l'une quelconque des revendications 3 à 5 précédentes, le serveur (5) mémorisant dans une base de données une identification individuelle d'étiquette d'étagère pour chaque étiquette d'étagère (2A à 2K) et adressant directement l'étiquette d'étagère (2A à 2K) concernée à l'aide de l'identification d'étiquette d'étagère.

7. Système (1) électronique d'étiquettes d'étagères selon la revendication 2,
- le lecteur NFC (4A à 4C) étant affecté à l'un des créneaux temporels (Z1 à ZN) et mémorisant une structure de données laquelle représente les étiquettes d'étagères (2A à 2K) fixées sur le rail d'étagère (3) du lecteur NFC (4A à 4C) et
- le lecteur NFC (4A-4C) étant conçu pour vérifier le créneau temporel (Z1 à ZN) auquel il est lui-même affecté pour savoir si l'étiquette d'étagère (2A à 2K) fixée sur son rail d'étagère (3) est adressée par le serveur (5).

8. Système (1) électronique d'étiquettes d'étagères selon la revendication 7, en présence d'un résultat de vérification positif, le lecteur NFC (4A à 4C) étant conçu pour transmettre des données entre l'étiquette d'étagère (2A à 2K) adressée et le point d'accès (6) dans le créneau temporel (Z1 à ZN) déterminé pour lui.

9. Système (1) électronique d'étiquettes d'étagères selon l'une quelconque des revendications 7 ou 8,
- le lecteur NFC (4A à 4C) présentant un état de sommeil économiseur d'énergie, dans lequel il n'existe aucune disponibilité de communication, pour la communication avec le point d'accès (6) et un état actif, dans lequel il existe une disponibilité de communication avec le point d'accès (6) et
- le lecteur NFC (4A à 4C) étant conçu pour passer du mode sommeil en mode actif en temps utiles lors de la survenue du créneau temporel (Z1 à ZN), auquel il est lui-même affecté.

10. Système (1) électronique d'étiquettes d'étagères selon l'une quelconque des revendications 7 à 9, le serveur (5) mémorisant dans une base de données une interconnexion entre une identification de lecteur d'un lecteur NFC (4A à 4C) et une identification d'étiquette d'étagère de l'étiquette d'étagère (2A à 2K) qui est installée sur le rail d'étagère (3) du lecteur NFC (4A à 4C) et adressant indirectement une étiquette d'étagère (2A à 2K) par l'intermédiaire de l'interconnexion entre l'identification d'étiquette d'étagère de l'étiquette d'étagère (2A à 2K) qui doit être adressée et l'identification de lecteur.

11. Système (1) électronique d'étiquettes d'étagères selon l'une quelconque des revendications précédentes, l'étiquette d'étagère (2A à 2K) comportant une unité d'affichage (16) économisant l'énergie, basée notamment sur la technologie de l'encre électronique ou sur la technologie du papier électronique.

12. Système (1) électronique d'étiquettes d'étagères selon l'une quelconque des revendications précédentes, l'étiquette d'étagère (2A à 2K) comportant un accumulateur d'énergie (12B) électrique rechargeable et étant conçu pour le rechargement sans contact de l'accumulateur d'énergie (12B) à l'aide d'un signal radio NFC du lecteur NFC (4A à 4C).

13. Procédé opérationnel d'un système (1) électronique d'étiquettes d'étagères selon l'une quelconque des revendications 1 à 12, selon le procédé, les données étant communiquées entre le lecteur NFC (4A à 4C) et l'étiquette d'étagère (2A à 2K) adressée par le serveur (5) au moyen d'une communication **NFC.**

14. Utilisation d'un sous-système de communication en champ proche (Near Field Communication), en abrégé sous-système NFC sur un rail d'étagère (3) d'une étagère (9) d'un système électronique (1) d'étiquettes d'étagère selon l'une quelconque des revendications 1 à 12, le sous-système NFC étant utilisé pour, dans le cadre d'une communication NFC, communiquer des données avec une étiquette d'étagère (2A à 2K) adressée par un serveur (5) du système (1).
